(19) Europäisches Patentamt European Patent Office Office européen des brevets

(11) **EP 1 964 419 B1**

(12) **EUROPEAN PATENT SPECIFICATION**

(45) Date of publication and mention
of the grant of the patent:
**05.01.2011 Bulletin 2011/01**

(51) Int Cl.:
***H04W 24/10*** *(2009.01)*

(21) Application number: **06847858.5**

(22) Date of filing: **20.12.2006**

(86) International application number:
**PCT/US2006/048675**

(87) International publication number:
**WO 2007/075829 (05.07.2007 Gazette 2007/27)**

(54) **Method and apparatus for selecting between a plurality of dictionaries for reporting in wireless communications**

Verfahren und Vorrichtung zur Auswahl zwischen mehreren Wörterbüchern zur Berichterstattung in drahtloser Kommunikation

Procédé et dispositif permettant de choisir entre plusieurs dictionnaires pour des rapports de communication sans fil

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.12.2005 US 752973 P**
**17.01.2006 US 333792**
**08.12.2006 US 608781**

(43) Date of publication of application:
**03.09.2008 Bulletin 2008/36**

(60) Divisional application:
**09169752.4 / 2 120 506**

(73) Proprietor: **Qualcomm Incorporated**
**San Diego, CA 92121-1714 (US)**

(72) Inventors:
• **DAS, Arnab,**
**c/o Qualcomm Incorporated**
**San diego, California 92121-1714 (US)**
• **LI, Junyi**
**Bedminster, NJ 07921 (US)**

(74) Representative: **Heselberger, Johannes**
**Bardehle Pagenberg**
**Galileiplatz 1**
**81679 München (DE)**

(56) References cited:
**EP-A- 1 511 245      WO-A-2004/084503**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### FIELD OF THE INVENTION

The present invention relates to wireless communications methods and apparatus and, more particularly, to methods and apparatus related to selecting between a plurality of dictionaries.

### BACKGROUND

Wireless terminals in a wireless communications system supporting uplink traffic, e.g., uplink user data, from the wireless terminals to the base stations need to use uplink air link resources to both communicate control information and user data. In multiple access wireless communications systems, typically, multiple wireless terminals using a base station attachment point are competing for valuable uplink air link resources, e.g., uplink traffic channel air link resources. One approach to partitioning uplink traffic channel resources is for the wireless terminals to send resource requests to their current base station attachment point, for the base station to consider the competing requests and allocate the resources, e.g., uplink traffic channel segments, in accordance with its scheduling rules.

Individual wireless terminals can have different needs for uplink traffic channel resources at different times, e.g., depending on a variety of factors such as the type(s) of user data to be communicated, e.g., voice, image data, Web browser information, data files, etc., latency requirements, predetermined data groupings, and/or priority levels.

A single fixed interpretation uplink traffic channel request report format used for a particular type of uplink request report, understood by the base station and the wireless terminals, and used uniformly in the system, although simple to implement, is not well suited to efficiently communicate a wide range of uplink traffic channel request information. By increasing the bit size of the fixed interpretation information report to a relatively large number, the range of reporting possibilities increases, but this is achieved at the expense of valuable air link resources which could have otherwise been devoted to user traffic.

Based on the above discussion, it should be appreciated that there is a need for methods and apparatus for reporting information in an efficient manner. It would be desirable if at least some efficient reporting methods could be devised. It would also be desirable if at least some methods could be used to implement an uplink traffic channel resource request structure which is accommodating to a wide range of wireless terminal operating conditions, types of wireless terminals and/or blend of applications. It should also be appreciated that for some systems there is a need for at least some methods and apparatus which can efficiently communicate the varying needs of individual wireless terminals for uplink traffic channel resources. Methods and apparatus which achieve reporting diversity while accommodating small information report size, e.g., of 3 or 4 bits, would be beneficial. Methods and apparatus which support the maintenance of multiple uplink traffic channel request groups, multiple types of traffic flows, communication of backlog information and/or communication of delay information would also be beneficial. Methods and apparatus which provide for intelligent selection between various available reporting format alternatives would also be desirable. Well suited selection of a reporting format alternative could result in more efficient scheduling, reduced interference, a better quality of service, and/or higher throughput.

WO 2004/084503 (A2) discloses a wireless communications network which includes a mobile station and base station that are capable of communicating over a wireless link. Information relating to a status of a buffer in the mobile station and information relating to a data rate over a reverse wireless links is communicated over the reverse wireless link.

EP 1 511 245 (A2) discloses a method and an apparatus for reporting a buffer status of a buffer storing packet data to be transmitted by a user equipment for a scheduling assignment of an uplink packet data service in a mobile communication system supporting the uplink packet data service. A user equipment stores packet data having a priority corresponding to a plurality of priority queues having inherent priorities and relating to at least one service, and transmits buffer status information containing queue identifiers of the priority queues and buffer payload information representing an amount of the packet data stored in the priority queues. Herein, the user equipment inserts the buffer status information into a header part of a protocol data unit for the uplink packet data service, inserts the packet data into a payload part of the protocol data unit, and then transmits the protocol data unit.

### SUMMARY

The invention is defined in the independent claims.

It should be appreciated that not necessarily all embodiments include the same features and some of the features described above are not necessary but can be desirable in some embodiments. Numerous additional features, embodiments and benefits of the present invention are discussed in the detailed description which follows.

### BRIEF DESCRIPTION OF THE FIGURES

Figure 1 is drawing of an exemplary wireless communications system implemented in accordance with various embodiments.

Figure 2 is a drawing of an exemplary base station in accordance with carious embodiments.

Figure 3 is a drawing of an exemplary wireless terminal, e.g., mobile node, in accordance with various embodiments.

Figure 4 is a drawing of a flowchart of an exemplary method of operating a communications device in accordance with various embodiments.

Figure 5 is a drawing of an exemplary base station in accordance with various embodiments.

Figure 6 is a drawing of an exemplary wireless terminal, e.g., mobile node, in accordance with various embodiments.

Figure 7 is a drawing of exemplary uplink dedicated control channel (DCCH) segments in an exemplary uplink timing and frequency structure in an exemplary orthogonal frequency division multiplexing (OFDM) multiple access wireless communications system.

Figure 8 is a drawing of a table listing exemplary dedicated control reports that may be communicated using the dedicated control channel segments of Figure 7.

Figure 9 is a drawing illustrating exemplary reporting format information in an exemplary recurring time interval for a given dedicated control channel tone, e.g., corresponding to a wireless terminal.

Figure 10 is a table of an exemplary format for an exemplary 1 bit uplink request (ULRQST1) report used in exemplary request dictionaries with reference number = 0, 1, 2 and 3.

Figure 11 is an exemplary table used to calculate exemplary control parameters y and z, the control parameters y and z being used in determining uplink multi-bit request reports conveying transmission request information corresponding to request dictionaries with reference number 0, 1, 2, and 3.

Figure 12 and Figure 13 define report formats corresponding to an exemplary request dictionary with the request dictionary (RD) reference number equal to 0.

Figure 14 and Figure 15 includes tables which define report formats corresponding to an exemplary request dictionary with the RD reference number equal to 1.

Figure 16 and Figure 17 include tables which define report formats corresponding to an exemplary request dictionary with the RD reference number equal to 2.

Figure 18 and Figure 19 include tables which define report formats corresponding to an exemplary request dictionary with the RD reference number equal to 3.

Figure 20 is a table of an exemplary format for an exemplary 1 bit uplink request (ULRQST1) report used in exemplary request dictionaries A, B, and C.

Figure 21 is a drawing of a table illustrating exemplary control factor determination as a function of previously reported control information, the control factors being used in generating and interpreting request reports in accordance with exemplary request dictionaries A, B, C, D and E.

Figure 22 is a drawing of a table describing an exemplary 3 bit uplink request report format corresponding to an exemplary Request Dictionary A.

Figure 23 is a drawing of a table describing an exemplary 4 bit uplink request report format corresponding to the exemplary Request Dictionary A.

Figure 24 is a drawing of a table describing an exemplary 3 bit uplink request report format corresponding to an exemplary Request Dictionary B.

Figure 25 is a drawing of a table describing an exemplary 4 bit uplink request report format corresponding to the exemplary Request Dictionary B.

Figure 26 is a drawing of a table describing an exemplary 3 bit uplink request report format corresponding to an exemplary Request Dictionary C.

Figure 27 is a drawing of a table describing an exemplary 4 bit uplink request report format corresponding to the exemplary Request Dictionary C.

Figure 28 is a drawing of a table describing an exemplary 1 bit uplink request report format corresponding to exemplary Request Dictionaries D and E.

Figure 29 is a drawing of a table describing an exemplary 4 bit uplink request report format corresponding to an exemplary Request Dictionary D.

Figure 30 is a drawing of a table describing an exemplary 3 bit uplink request report format corresponding to the exemplary Request Dictionary D.

Figure 31 is a drawing of a table describing an exemplary 4 bit uplink request report format corresponding to an exemplary Request Dictionary E.

Figure 32 is a drawing of a table describing an exemplary 3 bit uplink request report format corresponding to the exemplary Request Dictionary E.

## DETAILED DESCRIPTION

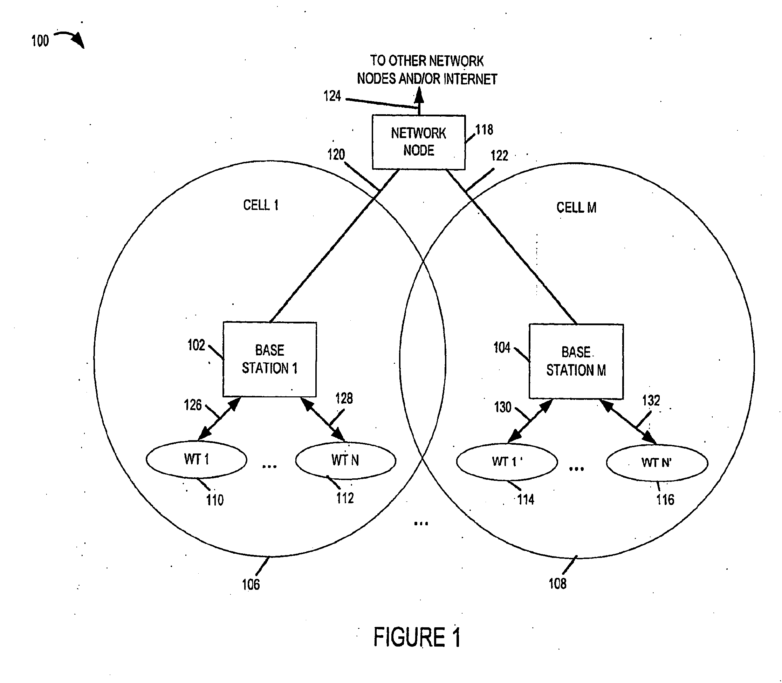

Figure 1 is drawing of an exemplary wireless communications system 100 implemented in accordance with various embodiments. Exemplary wireless communications system 100 is, e.g., an orthogonal frequency division multiplexing (OFDM) multiple access wireless communications system. Exemplary communications system 100 supports a plurality of request dictionaries, each request dictionary defining report format for conveying wireless terminal requests for uplink air link resources, e.g., requests for uplink traffic channel segments. For example, one request dictionary may define a first set of bit mapping information for an exemplary 1 bit request report, a 3 bit request report and a 4 bit request report, while another request dictionary may define a second set of bit mapping information for the exemplary 1 bit request report, the 3 bit request report and the 4 bit request report, where the first and second sets of bit mapping information are different for at least one of said 1 bit request report, 3 bit request report and 4 bit request report.

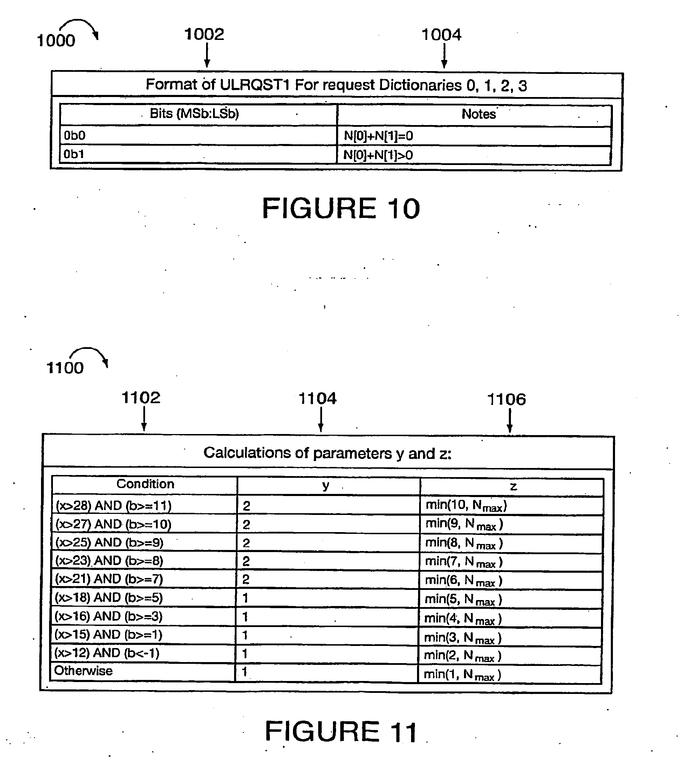

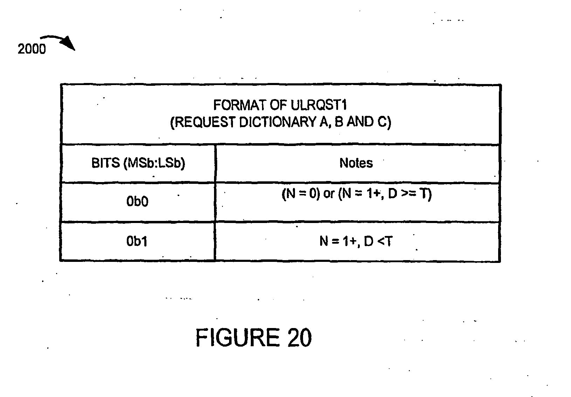

In some embodiments, at least some of the different supported request dictionaries define format conveying backlog information and delay information, and at least some of the different supported request dictionaries define format conveying backlog information but not including delay information. For example, one such exemplary system includes at least one of the exemplary request dictionaries (Ref numbers 0, 1, 2, 3) of Figures 10-19, each which uses format for conveying backlog information but not for conveying delay information, and at least one of the exemplary request dictionaries (A, B, C, D, E) of Figures 20-32, each which uses format for conveying backlog information and delay information.

In various embodiments, each of the plurality of alternative supported request dictionaries defines format conveying backlog information but do not include delay information. For example, one such exemplary system use the set of exemplary request dictionaries {RD Ref. No. 0, RD Ref. No. 1, RD Ref. No. 2, RD Ref. No. 3) of Figures 10-19.

In some embodiments, corresponding to at least some individual wireless terminals, a plurality of alternative supported request dictionaries define format conveying backlog information but do not include delay information.

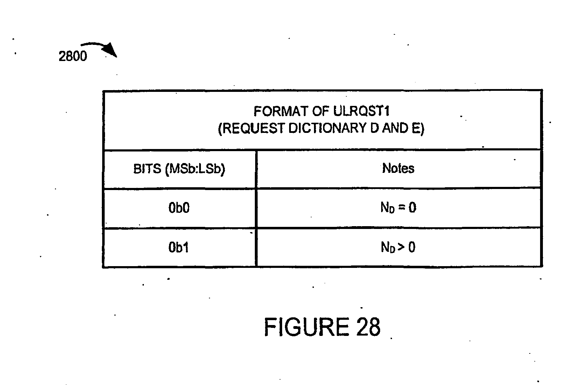

In various embodiments, each of the plurality of alternative supported request dictionaries define format conveying backlog information and delay information. For example, one such exemplary system uses the set of exemplary request dictionaries {Request Dictionary A, Request Dictionary B, Request Dictionary C} of Figures 20-27). As another example, another such exemplary system uses the set of exemplary request dictionaries {Request Dictionary D, Request Dictionary E} of Figures 28-32.

In some embodiments, corresponding to at least some individual wireless terminals, a plurality of alternative supported request dictionaries define format conveying backlog information and delay information.

Exemplary wireless communications system 100 includes a plurality of base stations (base station 1 102, ..., base station M 104). Each base station (102, 104) has a corresponding wireless coverage area (cell 1 106, cell M 108), respectively. System 100 also includes network node 118 which is coupled to base stations (102, 104) via network links (120, 122), respectively. Network node 118 is also coupled to other network nodes and/or the Internet via link 124. Network links (120, 122, 124) are, e.g., fiber optic links. System 100 may also include cells with multiple sectors and/or cells using multiple carriers. At least some of the base stations (102,104) in system 100 support a plurality of request dictionaries.

System 100 also includes a plurality of wireless terminals. At least some of the wireless terminals are mobile nodes which may move throughout the communication system. In Figure 1, wireless terminals (WT 1 110, WT N 112) are located in cell 1 106 and coupled to base station 1 102 via wireless links (126, 128), respectively. In Figure 1, wireless terminals (WT 1' 114, WT N' 116) are located in cell M 108 and coupled to base station M 104 via wireless links (130, 132), respectively. At least some of the wireless terminals support a plurality of request dictionaries. Different base stations that support a plurality of request dictionaries may, and in some embodiments do, support different pluralities of request dictionaries. Different wireless terminals that support a plurality of request dictionaries may, and in some embodiments do, support different pluralities of request dictionaries.

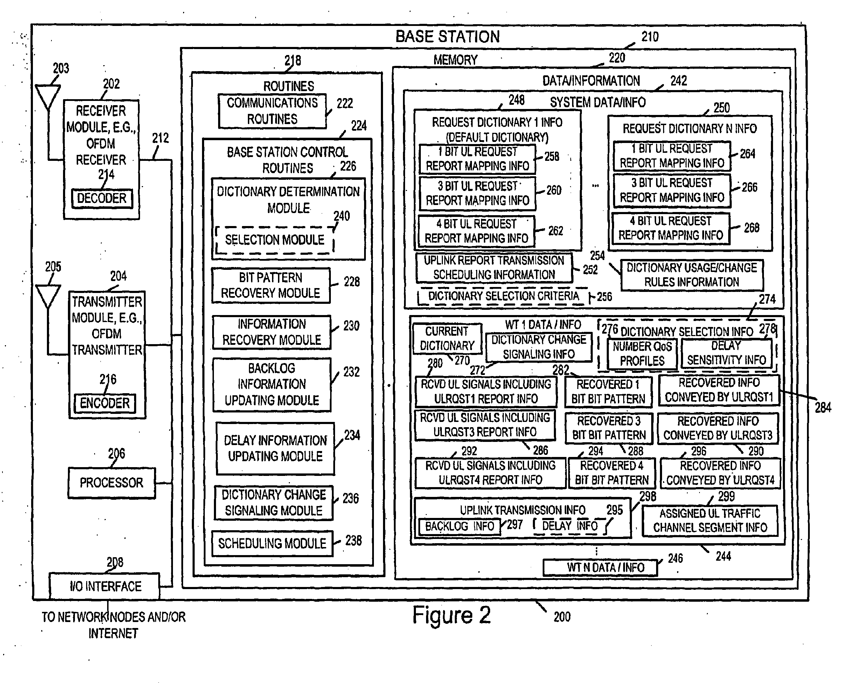

Figure 2 is a drawing of an exemplary base station 200 implemented in accordance with various embodiments. Exemplary base station 200 may be any of the exemplary base stations (BS 1 102, ..., BS M 104) of system 100 of Figure 1.

Exemplary base station 200 includes a receiver module 202, a transmitter module 204, a processor 206, I/O interface 208, and memory 210 coupled together via a bus 212 over which the various elements may interchange data and information. Memory 210 includes routines 218 and data/information 220. The processor 206, e.g., a CPU, executes the routines 218 and uses the data/information 220 in memory 210 to control the operation of the base station 200 and implement methods.

Receiver module 202, e.g., an OFDM receiver, is coupled to receive antenna 203 via which the base station 200 receives uplink signals from wireless terminals. Receiver module 202 includes a decoder module 214 for decoding at least some of the received uplink signals. Uplink signals include control channel reports, e.g., dedicated control channel reports such as uplink request reports, interference reports, noise reports, power reports, SNR reports, etc. The control channel reports include request reports, e.g., 1 bit uplink request reports, 3 bit uplink request reports, and 4 bit uplink request reports. The request reports are in accordance with a reporting format specified by a request dictionary in use by the wireless terminal generating and transmitting the reports. At the same time different wireless terminals may and sometimes do use different request dictionaries. At different times the same wireless terminal may and sometimes does use a different request dictionary. Other received uplink signals include request dictionary change signals and traffic channel segment signals.

Transmitter module 204, e.g., an OFDM transmitter, is coupled to transmit antenna 205 via which the base station 200 transmits downlink signals to wireless terminals. Downlink signals include assignment signals conveying assignments for uplink traffic channel segments and request dictionary change signals. Transmitter module 204 includes an encoder module 216 which encodes at least some of the downlink signals.

I/O interface 208 couples the base station 200 to other network nodes, e.g., other base stations, AAA nodes, home agent nodes, routers, etc., and/or the Internet. I/O interface 208 allows a wireless terminal using a base station 200 attachment point to communicate with a peer node using another base station as it point of network attachment.

Routines 218 include communications routines 222 and base station control routines 224. The communications routines 222 implements various communications protocols used by the base station 200. Base station control routines 224 include a dictionary determination module 226, a bit pattern recovery module 228, an information recovery module 230, a backlog information updating module 232, a delay information updating module 234, a dictionary change signaling module 236 and a scheduling module 238.

Dictionary determination module 224 determines for a wireless terminal, e.g., on a per wireless terminal basis, which request dictionary is being used. In some embodiments, dictionary determination module 224 includes a selection module 240, which selects for at least some wireless terminals for at least some intervals and/or reports which of a plurality of request dictionaries is to be used by the wireless terminal.

Selection module 240 selects a dictionary as a function of at least one of: (i) whether or not delay information is to be communicated by at least some of the request reports,

(ii) type of delay information to be communicated,
(iii) a number of quality of service profiles,
(iv) traffic flow classification information, e.g., voice vs data, (v) a number of request groups,
(vi) whether backlog information is to be reported corresponding to a plurality of different request groups with different reporting parameters associated with the different request groups or whether ensemble request group backlog information is to reported.

Bit pattern recovery module 228 recovers information bit patterns from received uplink signals corresponding to control information reports. For example, bit pattern recovery module 228 recovers a single information bit corresponding to a ULRQST1 report received in uplink signals of a dedicated control channel segment. Bit pattern recovery module 228 also recovers three information bits corresponding to a ULRQST3 report received in uplink signals of a dedicated control channel segment. Bit pattern recovery module 228 also recovers four information bits corresponding to a ULRQST4 report received in uplink signals of a dedicated control channel segment.

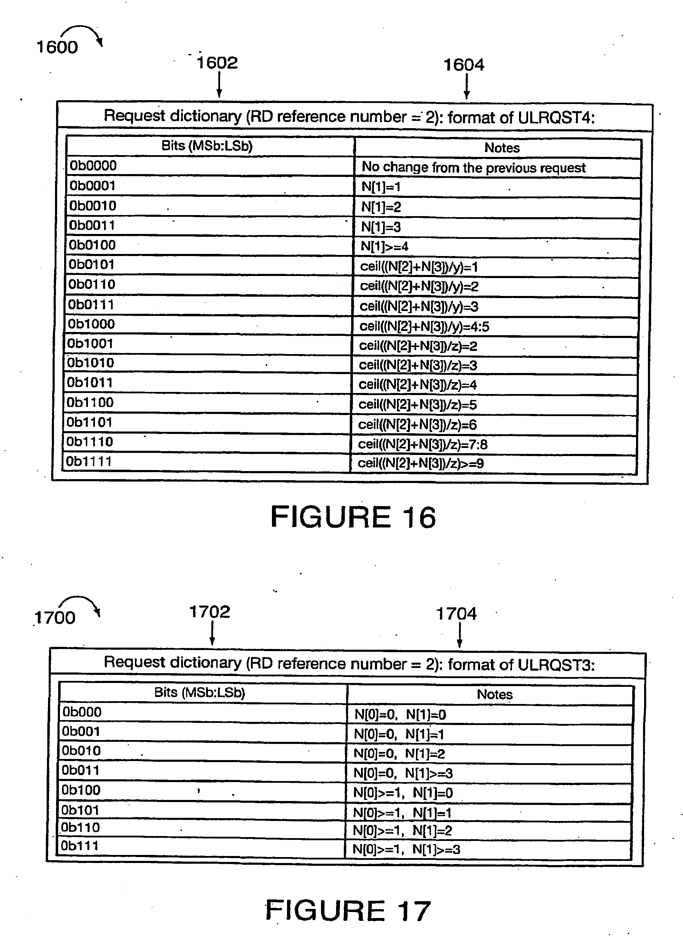

Information recovery module 230 uses stored request dictionary format information corresponding to the determined request dictionary which was used to transmit the received uplink request report and the recovered bit pattern to recover information. For example, consider that the dictionary determination module 226 had determined that the wireless terminal which transmitted a received 4 bit request report used request dictionary reference number 2 of Figure 16, and the bit recovery module 228 recovered bit pattern 0011, then information recovery module 230 determines that the information communicated is N[1] = 3, signifying that request group 1 has 3 frames of information in its backlog that it would like to transmit.

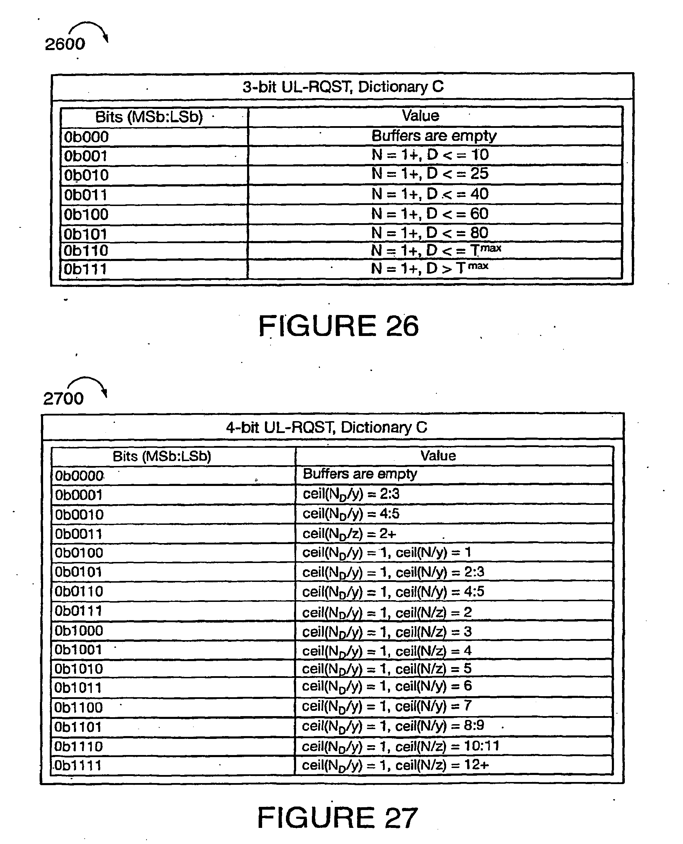

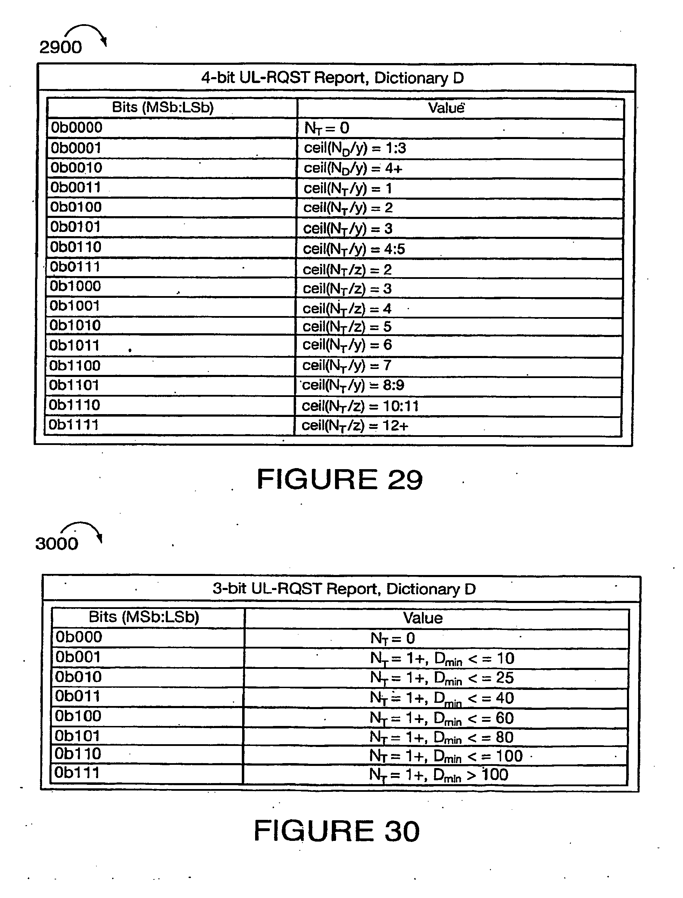

Backlog information updating module 232 uses information recovered from the received and processed request reports to update maintained backlog information, e.g., frame count information, corresponding to the wireless terminals. Delay information updating module 234 uses information recovered from the received and processed request reports to update maintained delay information, e.g., delay information corresponding to backlog information. Examples of exemplary delay information, which may be maintained and updated include, e.g., the value of D corresponding to a report using the format of Figure 26 and the value of $D_{min}$ corresponding to a report using the format of Figure 30.

Dictionary change signaling module 236 performs operations controlling and/or generating various handshaking and/or signaling exchanges used to communicate which request dictionary is to be used by which wireless terminal corresponding to time intervals and/or reports. Dictionary change signaling module 236, in some embodiments, processes a signal communicating a wireless terminal selection of a request dictionary. Dictionary change signaling module 236, in some embodiments, generates a signal communicating a base station selection of a request dictionary for a wireless terminal to use.

Scheduling module 238, e.g., a scheduler, schedules air link resources including uplink traffic channel segments to wireless terminals. For example, scheduling module 238 schedules uplink traffic channels segments to competing wireless terminals which have communicated uplink control channel request reports as a function of information communicated in those reports, e.g., backlog and/or delay information.

Data/information 220 includes system data/information 242 and a plurality of sets of wireless terminal data/information (WT 1 data/information 244, ..., wireless terminal N data/information 246). System data/information 242 includes a plurality of sets of request dictionary information (request dictionary 1 information 248, ..., request dictionary N information 250), uplink report transmission scheduling information 252 and dictionary usage/change rules information 254. In some embodiments, e.g., embodiments in which base station 200 makes at least some of the decisions as to which request dictionary a wireless terminal should use, system data/information 242 includes dictionary selection criteria 256.

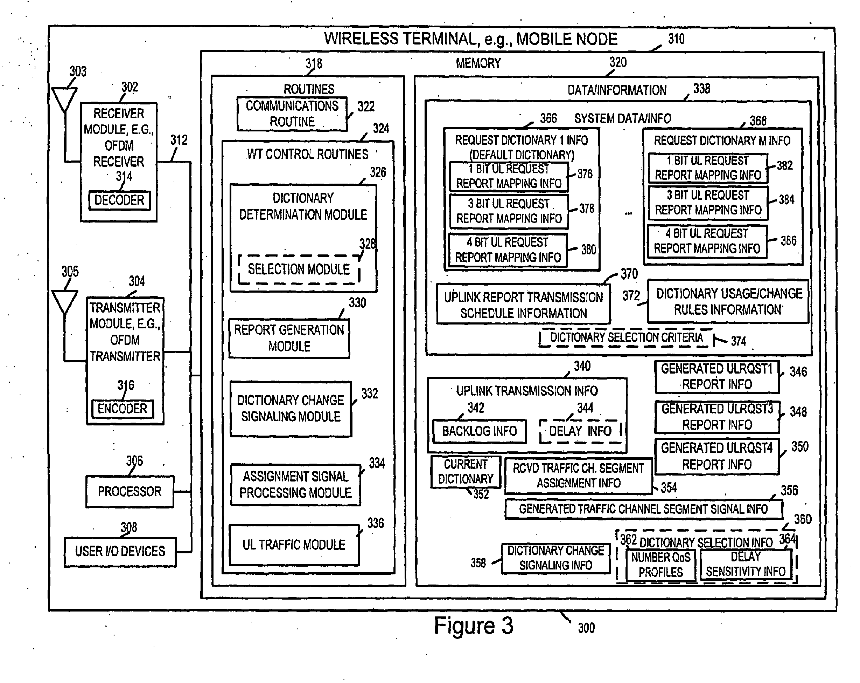

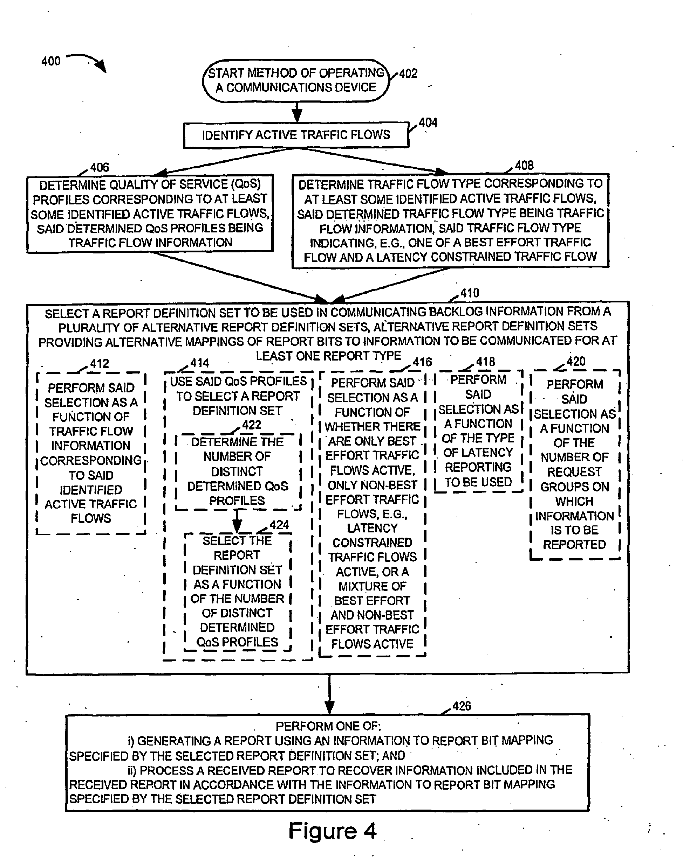

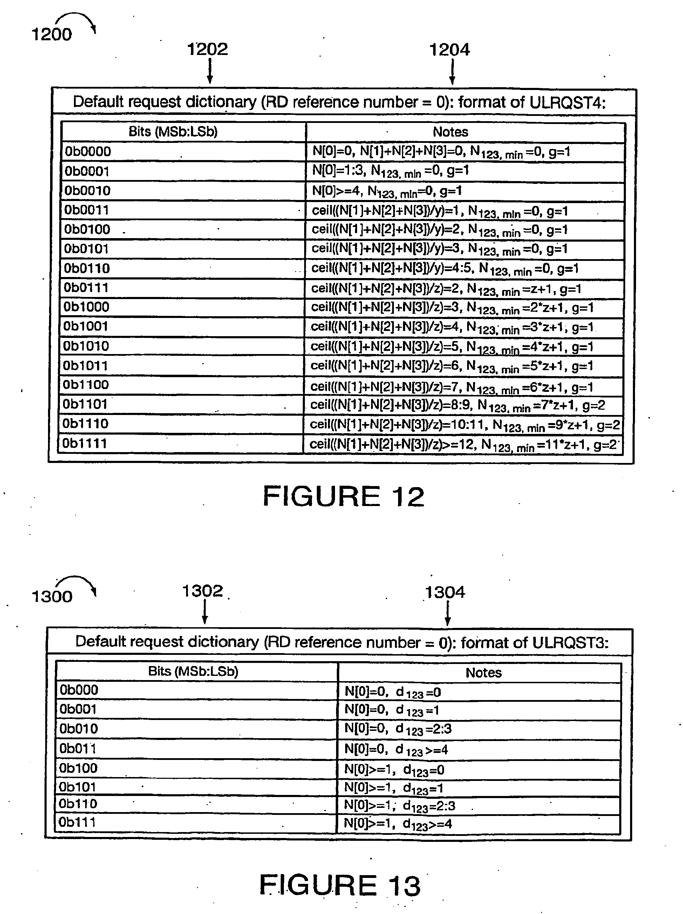

Request dictionary 1 information 248, e.g., corresponding to the default dictionary, includes 1 bit uplink request report mapping information 258, 3 bit uplink request report mapping information 260 and 4 bit uplink request report mapping information 262. 1 bit request report mapping information 258 includes, e.g., information of table 1000 of Figure 10; 3 bit uplink request report mapping information 260 includes, e.g., information of table 1300 of Figure 13; 4 bit uplink request report mapping information 262 includes, e.g., information of table 1200 of Figure 12.

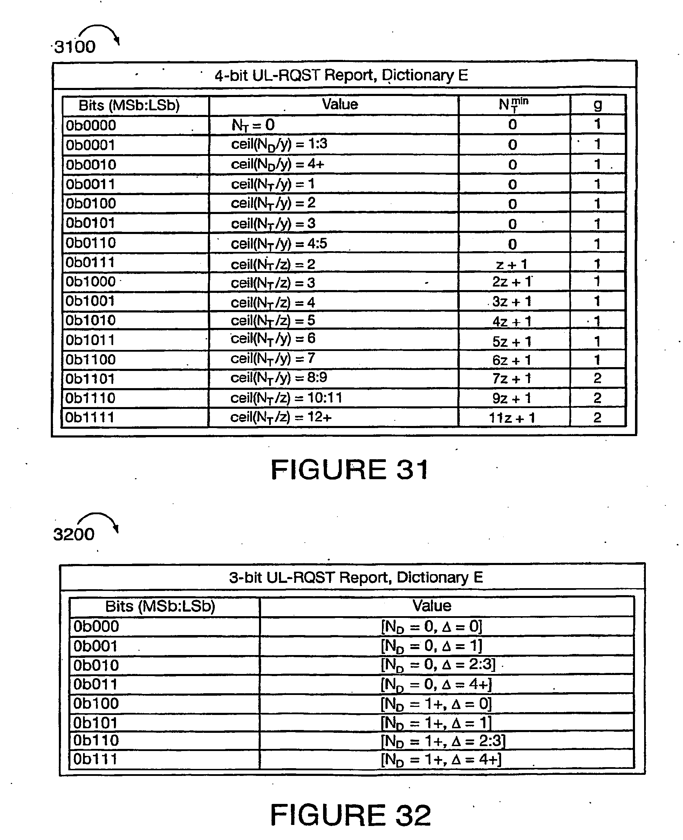

Request dictionary N information 250 includes 1 bit uplink request report mapping information 264, 3 bit uplink request report mapping information 266 and 4 bit uplink request report mapping information 268. 1 bit request report mapping information 264 includes, e.g., information of table 2800 of Figure 28; 3 bit uplink request report mapping information 266 includes, e.g., information of table 3200 of Figure 32; 4 bit uplink request report mapping information 268 includes, e.g., information of table 3100 of Figure 31.

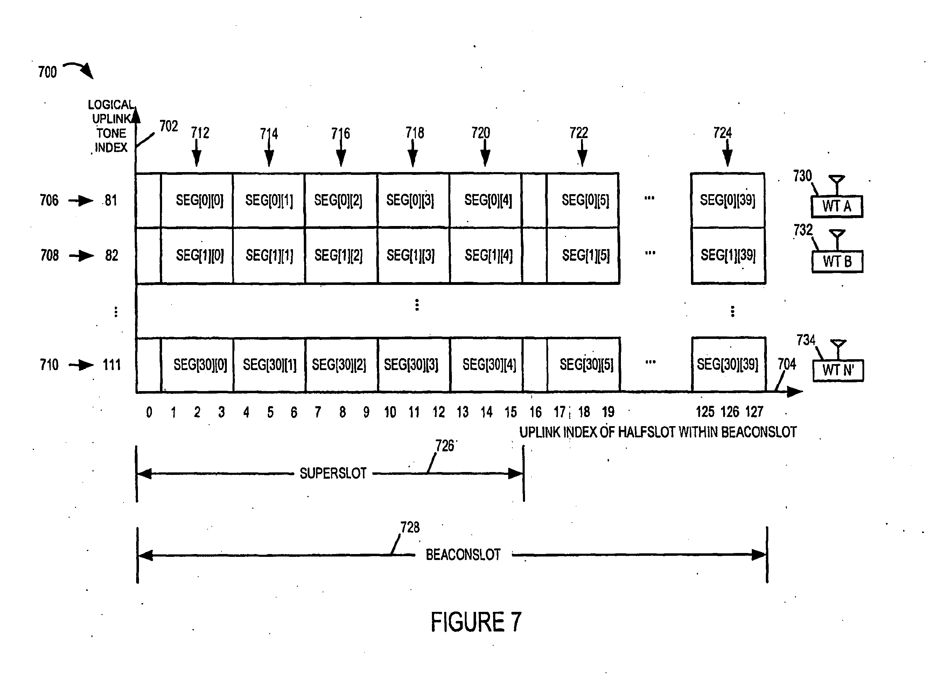

Uplink report transmission scheduling information 252 includes information identifying uplink request reports in a recurring uplink timing and frequency structure. For example, in an exemplary embodiment uplink report transmission scheduling information 252 includes information corresponding to Figures 7, 8 and 9 identifying a recurring dedicated control channel reporting structure including 1 bit uplink request report (ULRQST1) slots , 3 bit uplink request report (ULRQST3) slots, and 4 bit uplink request report (ULRQST4) slots.

Dictionary usage/change rules information 254 includes information identifying when a default request dictionary should be used, and rules for changing to a different request dictionary, e.g., information identifying switching protocols including information to allow a base station and wireless terminal to have the same understanding with regard to which dictionary is being used with respect to a particular uplink request report.

Dictionary selection criteria information 256 includes information used by selection module 240 to select which request dictionary should be used by a wireless terminal. Dictionary selection criteria 256 includes, e.g., information associating a particular request dictionary with the communication of backlog information and delay information, information associating a particular request dictionary with communicating backlog information without delay information, information associating a particular request dictionaries with a particular plurality of request groups, information associating a particular request dictionary with a particular number of quality of service levels, information associating a particular request dictionary with a set of traffic flow types, and/or information associating a particular request dictionary with a type of delay information to be communicated, e.g., time remaining to a transmission deadline, time waiting in a queue, delay information indirectly communicated using different backlog frame count classifications distinguishing between total backlog and backlog with respect to a delay consideration, etc.

WT 1 data/information 244 includes current dictionary information 270, dictionary change signaling information 272, received uplink signals including ULRQST1 report information 280, recovered 1 bit bit pattern 282, recovered information conveyed by ULRQST1 284, received uplink signals including ULRQST3 report information 286, recovered 3 bit bit pattern 288, recovered information conveyed by ULRQST3 290, received uplink signals including ULRQST4 report information 292, recovered 4 bit bit pattern 294, recovered information conveyed by ULRQST4 296, uplink transmission information 298, and assigned uplink traffic channel segment information 299. Uplink transmission information 298 includes backlog information 297 and, in some embodiments, delay information 295. In some embodiments, e.g., some embodiments in which base station 200 selects for WT1 between a plurality of alternative request dictionaries, WT 1 data/information 244 includes dictionary selection information 274. Dictionary selection information 274 includes a number of Quality of Service profiles 276 and delay sensitivity information 278.

Current dictionary information 270 includes information identifying the current request dictionary determined to be in use by wireless terminal 1 corresponding to a received uplink request report being processed. Dictionary change signaling information 272 includes information processed by and/or generated by dictionary change signaling module 236, e.g., information communicating a change selected by base station 200 or wireless terminal 1 and/or acknowledgement signaling in response to a communicated change of a request dictionary. (Received uplink signals including ULRQST1 report information 280, received uplink signals including ULRQST3 report information 286, received uplink signals including ULRQST4 report information 292) are, e.g., uplink dedicated control channel segment signals which are input to bit pattern recovery module 228, which generates (recovered 1 bit bit pattern 282, recovered 3 bit bit pattern 288, recovered 4 bit bit pattern 294), respectively. (Recovered 1 bit bit pattern 282, recovered 3 bit bit pattern 288, recovered 4 bit bit pattern 294) are inputs to information recovery module 230 which outputs (recovered info conveyed by ULRQST1 284, recovered info conveyed by ULRQST3 290, recovered information conveyed by ULRQST4 296).

Uplink transmission information 298 includes information being maintained corresponding to WT1 uplink traffic channel requests for resources. Backlog information 297, e.g., frame count information being maintained, e.g., $N[0]$, $N[1]$, $N[2]$, $N[3]$, $N$, $N_D$, $N_T$ and/or information derived from such parameters (see Figures 10-32), is an output of backlog information updating module 232 using recovered information (284, 290, 296) as input. Delay information 295, e.g., e.g., $D$, $D_{min}$ and/or information derived from such parameters (see Figures 20, 23, 24, 26, 30), is an output of delay information updating module 234 using recovered information (284, 290, 296) as input.

Assigned uplink traffic channel segment information 299 includes signals conveying assignments to WT1 of uplink traffic channel segments, e.g., assignments of indexed uplink traffic channel segments to WT1 in a recurring channel structure. Assigned uplink traffic channel segment information 299 includes outputs from scheduling module 238 in response to received uplink request reports.

Figure 3 is a drawing of an exemplary wireless terminal 300, e.g., mobile node, in accordance with various embodiments. Exemplary wireless terminal 300 may be any of the wireless terminals (110, 112, 114, 116) of system 100 of Figure 1. Exemplary wireless terminal 300 includes a receiver module 302, a transmitter module 304, a processor 306, user I/O devices 308, and a memory 310 coupled together via a bus 312 over which the various elements interchange data and information. Memory 310 includes routines 318 and data/information 320. The processor 306, e.g., a CPU, executes the routines 318 and uses the data/information 320 in memory 310 to control the operation of the wireless terminal 300 and implement methods.

Receiver module 302, e.g., an OFDM receiver, is coupled to receive antenna 303 via which the wireless terminal 300 receives downlink signals from base stations. Downlink signals include assignment signals conveying assignments of uplink traffic channel segments and dictionary change signals. Receiver module 302 includes a decoder module 314 for decoding at least some of the received signals.

Transmitter module 304, e.g., an OFDM transmitter, is coupled to transmit antenna 305, via which the wireless terminal 300 transmits uplink signals to base stations. The uplink signals include, e.g., dedicated control channel segments signals conveying control channel reports including 1 bit uplink request reports, 3 bit uplink request reports and 4 bit uplink request reports, dictionary change signals, and uplink traffic channel segment signals. In various embodiments, the same antenna is used for receiver module 302 and transmitter module 304, e.g., in conjunction with a duplex module. Transmitter module 304 includes an encoder module 316 for encoding at least some of the uplink signals, e.g., encoding a generated uplink request report into dedicated control segment signals.

User I/O devices 308, e.g., keypad, keyboard, microphone, switches, camera, speaker, display, etc., allow a user of wireless terminal 300 to input data/information, access output data/information, and control at least some functions of wireless terminal 300.

Routines 318 include a communications routine 322 and wireless terminal control routines 324. The communications routine 322 implements various communications protocols used by the wireless terminal 300. WT control routines 324 include a dictionary determination module 326, a report generation module 330, a dictionary change signaling module 332, an assignment signal processing module 334, and an uplink traffic module 336.

Dictionary determination module 326 determines which request dictionary to use corresponding to an uplink request report which the wireless terminal generates and transmits. In some embodiments, dictionary determination module 326 includes a selection module 328, which selects for at least some intervals and/or reports which of a plurality of request dictionaries is to be used by the wireless terminal.

Selection module 328 selects a dictionary as a function of at least one of: (i) whether or not delay information is to be communicated by at least some of the request reports, (ii) type of delay information to be reported (iii) a number of quality of service profiles, (iv) traffic flow classification information, e.g., voice vs data, (v) a number of request groups, (vi) whether backlog information is to be reported corresponding to a plurality of different request groups with different reporting parameters associated with the different request groups or whether ensemble request group backlog information is to be reported.

Report generation module 330 uses the determined request dictionary format information corresponding to the determination by dictionary determination module 326 and uplink transmission information 340 to generate an uplink request report, e.g., an ULRQST1 report, ULRQST3 report, or ULRQST4 report. In accordance with the uplink transmission report schedule information 370 different types of uplink reports (1,3, or 4 bit) are allocated different reporting slots.

Dictionary change signaling module 332 performs operations controlling and/or generating various handshaking and/or signaling exchanges used to communicate which request dictionary is to be used by wireless terminal 300 corresponding to time intervals and/or reports. Dictionary change signaling module 332, in some embodiments, processes a signal communicating a base station's selection of a request dictionary for wireless terminal 300 to use. Dictionary change signaling module 332, in some embodiments, generates a signal communicating to a wireless terminal 300 selection of a request dictionary for WT 300 use, the generated signal to be communicated to the base station for which the subsequent request report is to be communicated.

Assignment signal processing module 334 receives and processes signals conveying assignments of uplink traffic channel segments, identifying assignments which are directed to WT 300. Uplink traffic module 336 generates uplink traffic channel segment signals to be conveyed by WT 300 using identified assignment allocations to WT 300.

Data/information 320 includes system data/information 338, uplink transmission information 340, current dictionary information 352, generated ULRQST1 report information 346, generated ULRQST3 report information 348, generated ULRQST4 report information 350, received traffic channel segment assignment information 354, generated traffic channel segment signal information 356, and dictionary change signaling information 358. Uplink transmission information 340 includes backlog information 342 and, in some embodiments, delay information 344. In some embodiments, e.g., some embodiments in which WT 300 selects as to which dictionary to use from among a plurality of alternative dictionaries, data/information 320 includes dictionary selection information 360. Dictionary selection information 360 includes number of quality of service profiles 362 and delay sensitivity information 364.

System data/information 338 includes a plurality of sets of request dictionary information (request dictionary 1 information 366, ..., request dictionary M information 368), uplink report transmission scheduling information 370 and dictionary usage/change rules information 372. In some embodiments, e.g., embodiments in which wireless terminal 300 makes at least some of the decisions as to which request dictionary to use, system data/information 338 includes dictionary selection criteria 374.

Request dictionary 1 information 366, e.g., corresponding to the default dictionary, includes 1 bit uplink request report mapping information 376, 3 bit uplink request report mapping information 378 and 4 bit uplink request report mapping information 380. 1 bit request report mapping information 376 includes, e.g., information of table 1000 of Figure 10; 3 bit uplink request report mapping information 378 includes, e.g., information of table 1300 of Figure 13; 4 bit uplink request report mapping information 380 includes, e.g., information of table 1200 of Figure 12.

Request dictionary M information 368 includes 1 bit uplink request report mapping information 382, 3 bit uplink request report mapping information 384 and 4 bit uplink request report mapping information 386. 1 bit request report mapping information 382 includes, e.g., information of table 2800 of Figure 28; 3 bit uplink request report mapping information 384 includes, e.g., information of table 3200 of Figure 32; 4 bit uplink request report mapping information. 386 includes, e.g., information of table 3100 of Figure 31.

Uplink report transmission scheduling information 370 includes information identifying uplink request reports in a recurring uplink timing and frequency structure. For example, in an exemplary embodiment uplink report transmission scheduling information 370 includes information corresponding to Figures 7, 8 and 9 identifying a recurring dedicated control channel reporting structure including 1 bit uplink request report (ULRQST1) slots, 3 bit uplink request report (ULRQST3) slots, and 4 bit uplink request report (ULRQST4) slots.

Dictionary usage/change rules information 372 includes information identifying when a default request dictionary should be used, and rules for changing to a different request dictionary, e.g., information identifying switching protocols including information to allow a base station and wireless terminal 300 to have the same understanding with regard to which dictionary is being used with respect to a particular uplink request report.

Dictionary selection criteria information 374 includes information used by selection module 328 to select which request dictionary should be used by wireless terminal 300. Dictionary selection criteria 374 includes, e.g., information associating a particular request dictionary with the communication of backlog information and delay information, information associating a particular request dictionary with communicating backlog information without delay information, information associating a particular request dictionaries with a particular plurality of request groups, information associating a particular request dictionary with a particular number of quality of service levels, information associating a particular request dictionary with a set of traffic flow types, and/or information associating a particular request dictionary with a type of delay information to be communicated, e.g., time remaining to a transmission deadline, time waiting in a queue, delay information indirectly communicated using different backlog frame count classifications distinguishing between total backlog and backlog with respect to a delay consideration, etc.

Current dictionary information 352 includes information identifying the current request dictionary determined to be used by wireless terminal 300 corresponding to a generated uplink request report. Dictionary change signaling information 358 includes information processed by and/or generated by dictionary change signaling module 332, e.g., information communicating a change selected by wireless terminal 300 or a base station and/or acknowledgement signaling in response to a communicated change of a request dictionary.

Uplink transmission information 340 includes information being maintained corresponding to WT 300 uplink traffic channel requests for resources. Backlog information 342, e.g., frame count information being maintained, e.g., $N[0]$, $N[1]$, $N[2]$, $N[3]$, $N_D$, $N_T$ and/or information derived from such parameters (see Figures 10-32), is an input to report generation module 330. Delay information 344, e.g. delay information being maintained such as, e.g., $D$, $D_{min}$ and/or information derived from such parameters (see Figures 20, 23, 24, 26, 30), is an input to report generation module 330.

Generated ULRQST1 report information 346, generated ULRQST3 report information 348, and generated ULRQST4 report information 350 represent outputs of report generation module 330. Different type reports, e.g., 1 bit, 3 bit or 4 bit are generated for different slots in the recurring channel structure indicated by transmission schedule information 370.

Received traffic channel segment assignment information 354 includes signals conveying assignments to WT 300 of uplink traffic channel segments, e.g., assignments of indexed uplink traffic channel segments identifying WT 300 as the WT to which the uplink traffic channel segment has been assigned by the base station. The assignments may be in response to one or more previously communicated request reports.

Generated traffic channel segment signal information 356 includes signals generates by uplink traffic module 336, e.g., signals conveying frames of user data to be communicated in allocated traffic channel segments.

In some embodiments, e.g., some embodiments in which wireless terminal 300 selects between a plurality of alternative request dictionaries to use, data/information 320 includes dictionary selection information 360. Dictionary selection information 360 includes a number of Quality of Service profiles 362 and delay sensitivity information 364. For example, the number of quality service profiles, in some embodiments, identifies a number of different quality of service profiles corresponding to the traffic flows for which uplink traffic channel resources are to be requested in the request report. For example, different request dictionaries may correspond to different numbers of quality of service profiles. Delay sensitivity information 364 indicates, in some embodiments, whether or not the wireless terminal is to communicate delay information in a request reports. For example some request dictionaries may use formats supporting the communication of delay information, e.g., either directly or indirectly, while other request reports may use formats communicating backlog information with delay information. Delay sensitivity information 364 indicates, in some embodiments, whether or not the wireless terminal currently has uplink traffic flows with existing backlog corresponding to delay sensitive information, e.g., voice traffic. Delay sensitivity information 364 indicates, in some embodiments, a type of delay sensitivity information to be communicated, e.g., a separate parameter indicating a maximum delay waiting in a queue, a separate parameter indicating a minimum delay to a transmission deadline, delay information is to be communicated indirectly through frame count parameters.

Figure 4 is a drawing of a flowchart 400 of an exemplary method of operating a communications device in accordance with various embodiments. The communications device, e.g., a wireless communications device, may be a base station such as any of the base stations of system 100 of Figure 1 or a wireless terminal, e.g., mobile node; such as any of the wireless terminal of system 100 of Figure 1.

Operation starts in step 402, where the communications device is powered on and initialized. Operation proceeds from start step 402 to step 404. In step 404, the communications device identifies active traffic flows. Operation proceeds from step 404 to steps 406 and 408. In step 406, the communications device determines quality of service (QoS) profiles corresponding to at least some identified active traffic flows, said determined QoS profiles being traffic flow information. In step 408, the communications device determines traffic flow type corresponding to at least some identified active traffic flows, said determined traffic flow type being traffic flow information, said determined traffic flow type indicating, e.g., one of a best effort traffic flow and a latency constrained traffic flow. Traffic flow type information, in some embodiments, can also indicate various categories of latency constrained traffic flows. For example, voice traffic flows and gaming traffic flows may both be a latency constrained traffic flow type, but voice traffic flows may correspond to a more latency critical type of traffic flow than gaming traffic flows. In some embodiments, traffic flow type information for different latency constrained traffic flows indicates different types of latency reporting to be used.

Operation proceeds from steps 406 and 408 to step 410. In step 410, the communications device selects a report definition set to be used in communicating backlog information from a plurality of alternative report definition sets, alternative report definition sets providing alternative mappings of report bits to information to be communicated for at least one report type. In various embodiments step 410 includes one or more of sub-steps 412, 414, 416, 418,420.

In sub-step 412, the communications device performs said selection as a function of traffic flow information corresponding to said identified active traffic flows. In sub-step 414, the communications device uses said QoS profiles to select a report definition set. Sub-step 414 includes, in some embodiments, sub-steps 422 and 424. In sub-step 422, the communications device determines the number of distinct determined QoS profiles, and then in sub-step 424, the communications device selects the report definition set as a function of the number of distinct determined QoS profiles. In sub-step 416, the communications device performs said selection as a function of whether there are only best effort traffic flows active, only non-best effort traffic flows, e.g., latency constrained traffic flows, active, or a mixture of best effort and non-best effort traffic flows active. In some embodiments, a first report definition set is selected when only best effort traffic flows are active and another report definition set is selected when at least one non-best effort traffic flow is active. In sub-step 418, the communications device performs said selection as a function of the type of latency reporting to be used. In sub-step 420, the communications device performs said selection as a function of the number of request groups on which information is to be reported.

In various embodiments, the selected report definition set includes at least two different fixed size request report definitions corresponding to reports of different bit sizes, e.g., a 3bit bit size report and a 4 bit bit size report. In some embodiments, the selecting is performed as part of a traffic flow admission control operation. In various embodiments, the report definition sets are uplink request report definition sets which are used to define uplink reports requesting allocation of uplink traffic resources in a system using a dedicated control channel for communicating reports including said uplink reports.

Operation proceeds from step 410 to step 426. In step 426, the communications device performs one of: (i) generating a report using an information to report bit mapping specified by the selected report definition set; and (ii) process a received report to recover information included in the received report in accordance with the information to report bit mapping specified by the selected report definition set.

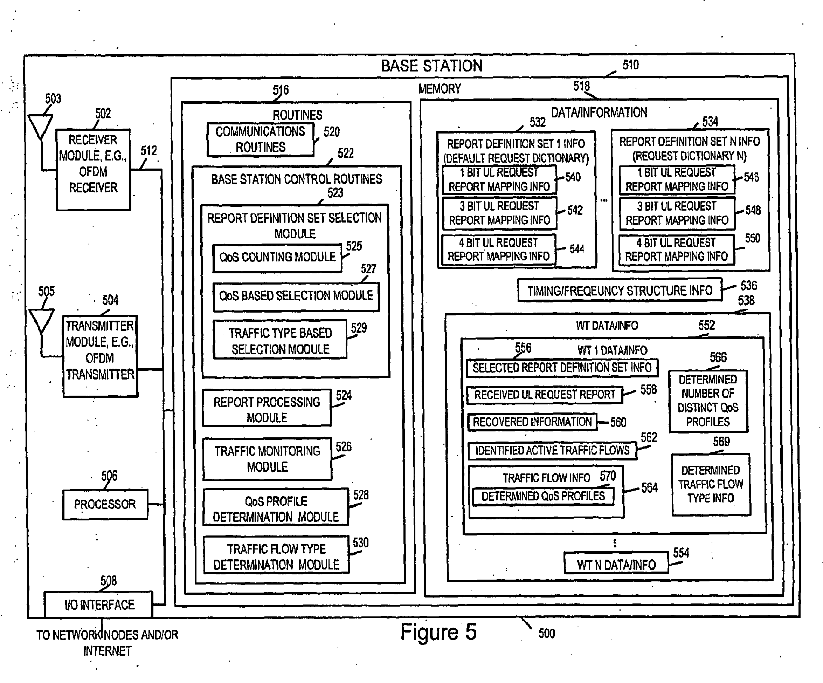

Figure 5 is a drawing of an exemplary base station 500, e.g., access node, in accordance with various embodiments. Exemplary base station 500 may be any of the base stations of exemplary system 100 of Figure 1. Base station 500 includes a receiver module 502, a transmitter module 504, a processor 506, an I/O interface 508, and memory 510 coupled together via a bus 512 over which the various elements may interchange data and information. Memory 510 includes routines 516 and data/information 518. The processor 506, e.g., a CPU, executes the routines 516 and uses the data/information 518 in memory 510 to control the operation of the base station 500 and implements methods.

Receiver module 502, e.g., an OFDM receiver, is coupled to receive antenna 503 via which the base station 500 receives uplink signals from wireless terminals. The received uplink signals include dedicated control channel reports including dedicated control channel request reports conveying backlog information and/or delay information. The received uplink signals also include uplink traffic channel segment signals. The received uplink signals may also include information related to active traffic flows, e.g., information to be used by base station 200 in making a base station selection of a report definition set for a given wireless terminal at a particular time.

Transmitter module 502, e.g., an OFDM transmitter, is coupled to transmit antenna 505 via which the base station 500 transmits downlink signals to wireless terminals. The downlink signals include assignment signals assigning uplink traffic channel segments to wireless terminals. The downlink signals also include signals conveying the base station's selection of which of a plurality of potential report definition sets is to be used by the wireless terminal for communicating uplink request reports. The base station may, and sometimes does, select different report definition sets to be used by different wireless terminals at the same time. The base station may, and sometimes does, select different report definition sets to be used by the same wireless terminal at different times. In some embodiments, the selection as to which report definition set is to be used by a wireless terminal is performed by the wireless terminal, e.g., with the wireless terminals selection being communicated to the base station such that base station can properly interpret reports from that wireless terminal.

I/O interface 508 couples the base station 500 to other network nodes, e.g., other base stations, AAA nodes, routers, home agent nodes, etc., and/or the Internet. I/O interface 508, by coupling BS 500 to a backhaul network, allows a wireless terminal using a base station 500 attachment point to participate in a communications session with a peer using another base station as its point of network attachment.

Routines 516 include communications routines 520 and base station control routines 522. The communications routines 520 implement various communications protocols used by the base station 500. Base station control routines 522 include a report definition set selection module 523, a report processing module 524, a traffic monitoring module 526, a quality of service profile determination module 528 and a traffic flow type determination module 530.

Report definition set selection module 523 selects a report definition set to be used in communicating backlog information from a plurality of alternative report definition sets, alternative report definition sets providing alternative mapping of report bits to information to be communicated for at least one report type. Report definition set selection module 523 includes a QoS counting module 525, a QoS based selection module 527, and a traffic type based selection module 529. QoS counting module 525 determines the number of distinct determined QoS profiles. QoS based selection module 527 selects the report definition set as a function of the number of distinct determined QoS profiles. Traffic type based selection module 529, in some embodiments, selects a first report definition set when only best effort traffic flows are active and selects another report definition set when at least one non-best effort traffic flow is active. In some embodiments, the traffic type based selection module 529 selects a report definition set as a function of the type of latency reporting to be used.

Report processing module 524 processes a received report and recovers information included in the received report in accordance with the information to report bit mapping specified by the selected report definition set. Traffic monitoring module 526 identifies active traffic flows. QoS profile determination module 528 determines QoS profiles corresponding to at least some identified traffic flows, said determined QoS profiles being traffic flow information. Traffic flow type determination module 530 determines traffic flow information corresponding to identified active traffic flows indicating a type for at least some of the identified active traffic flows.

Data/information 518 includes a plurality of sets of report definition information (report definition set 1 information 532, ... report definition set N information 534), timing/frequency structure, information 536, and wireless terminal data information 538.
Report definition set 1 information, e.g., information specifying a default request dictionary, includes 1 bit uplink request report mapping information 540, 3 bit uplink request report mapping information 542, and 4 bit uplink request report mapping information 544. Report definition set N information, e.g., information specifying a request dictionary N, includes 1 bit uplink request report mapping information 546, 3 bit uplink request report mapping information 548, and 4 bit uplink request report mapping information 550. The mapping information corresponding to at least one report is different between report definition set 1 information 532 and report definition set N information 534. Figure 10-32 provides examples of exemplary request dictionaries.

Timing/frequency structure information 536 includes, e.g., information specifying an uplink and a downlink timing structure, e.g., channel definition information and recurring timing structure information defining segments, transmission time intervals, and groupings of transmission time intervals. Figures 7-9 provide an example of exemplary timing/frequency structure information that may be included as part of information 536.

WT data/information 538 includes a plurality of sets of wireless terminal data/information (WT1 data/information 552, ..., WT N data/information 554). WT data/information 552 includes selected report definition set information 556, received uplink request report 558, recovered information 560, identified active traffic flows 562, traffic flow information 564, determined number of distinct QoS profiles 566, and determined traffic flow type information 569. Traffic flow information 564 includes determined QoS profiles 570.

Selected report definition set information 556 includes, e.g., an identifier value identifying the currently selected one of the report definition sets (report definition set 1 information 532, ..., report definition set N information 534). Selected report definition set information 556 is an output of report definition set selection module 523 and is used by report processing module 524 as an input. Received uplink request report 558, e.g., one of a received 1 bit uplink request report, a received 3 bit uplink request report, and a received 4 bit uplink request report is an input to the report processing module 524. At different times, received uplink request report 558 corresponds to a different bit size received uplink request report, e.g., as a function of the timing/frequency structure information 536. Recovered information 560 is an output of report processing module 524 and represents information conveyed in a request report, e.g., backlog and/or delay information, which was extracted by using the selected report definition set.

Identified active traffic flows, e.g., identified active uplink traffic flows corresponding to WT 1, are identified by the traffic monitoring module 526. Traffic flow information 564 includes determined QoS profiles 570. Multiple active traffic flows can and sometimes do have the same QoS profile. For example, two active traffic flows may correspond to voice traffic. Determined number of distinct QoS profiles 566 is an output of QoS counting module 525 and is used in the report definition selection process.

Determined traffic flow type information 569, in some embodiments, indicates on a per flow basis one of: a best effort traffic flow type and a latency constrained traffic flow type. Determined traffic flow type information 569 also indicates whether only best effort type flows are active, only non-best effort type flows, e.g., latency constrained flows are active, or whether there is a mixture of best effort and non-best effort flows active, with regard to flows being considered in the report definition set selection process: Determined traffic flow type information 569 may, and sometimes does include information identifying different types of latency constrained traffic flows, e.g., a voice traffic flow being a first type with a first level of latency requirements and a gaming traffic flow type being a second type with a second level of latency requirements being different from the first level of latency requirements. In some embodiments, determined traffic flow type information 569 identifies that one or more active traffic flows are to be reported using a specific type of latency reporting, e.g., minimum time to packet drop, time in a queue, classifications of frame counts with respect to predetermined latency limits, etc.

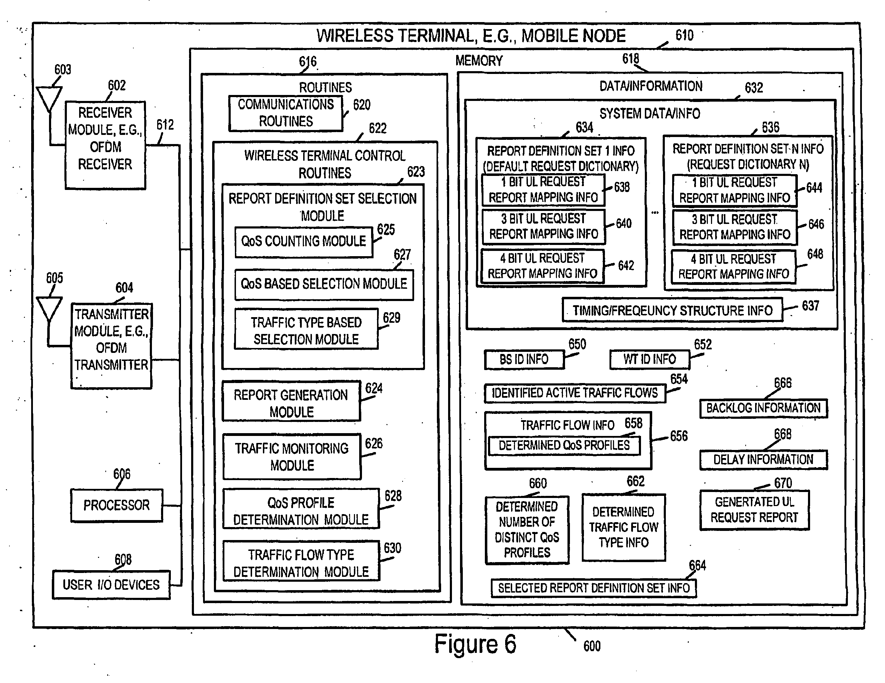

Figure 6 is a drawing of an exemplary wireless terminal 600, e.g., mobile node, in accordance with various embodiments. Exemplary wireless terminal 600 may be any of the exemplary wireless terminals of exemplary system 100 of Figure 1.

Exemplary wireless terminal 600 includes a receiver module 602, a transmitter module 604, a processor 606, user I/O devices 608, and memory 610 coupled together via a bus 612 over which the various elements may interchange data and information. Memory 610 includes routines 616 and data/information 618. The processor 606, e.g., a CPU, executes the routines 616 and uses the data/information 618 in memory 610 to control the operation of the wireless terminal 600 and implement methods.

Receiver module 602, e.g., an OFDM receiver, is coupled to receive antenna 603 via which the wireless terminal 600 receives downlink signals from base stations. Downlink signals include timing/synchronization signals such as, e.g., beacon signals and/or pilot signals, power and timing control signals, registration related signals including a base station assigned wireless terminal identifier, assignment signals including assignments of uplink traffic channel segments, and downlink traffic channel segment signals.

Transmitter module 604, e.g., an OFDM transmitter, is coupled to transmit antenna 605 via which the wireless terminal 600 transmits uplink signals to base stations. In some embodiments, the same antenna is used for receiver and transmitter modules. Uplink signals include dedicated control channel segment signals conveying various uplink control reports including request reports, e.g., 1 bit uplink request reports, 3 bit uplink request reports, and 4 bit uplink request reports. The uplink request reports convey backlog information relating to uplink traffic that the wireless terminal wants to transmit and/or related latency information. At a particular time, a generated uplink request report uses a bit mapping interpretation format in accordance with one of the plurality of request dictionaries supported by the wireless terminal. Uplink signals also include uplink traffic channel segment signals communicated using uplink traffic channel segments assigned to the wireless terminal, e.g., by a base station in response to one or more received request reports.

User I/O devices 608 include, e.g., microphone, keyboard, keypad, mouse, switches, camera, speaker, display, etc. User I/O devices 608 allow a user of WT 600 to input data/information, access output data/information, interact with applications, and control at least some functions of the wireless terminal.

Routines 616 include communications routines 620 and wireless terminal control routines 622. The communications routines 620 implement various communications protocols used by the wireless terminal 600.

Wireless terminal control routines 622 include a report definition set selection module 623, a report generation module 624, a traffic monitoring module 626, a QoS profile determination module 628 and a traffic flow type determination module 630.

Report definition set selection module 623 selects a report definition set to be used in communicating backlog information from a plurality of alternative report definition sets, alternative report definition sets providing alternative mapping of report bits to information to be communicated for at least one report type. For example, report definition set selection module 623 selects one of the alternative report definition sets (report definition set 1 634, .., report definition set N 636) which is supported by the base station to which the uplink request reports are to be directed. In some embodiments, different base stations in the communications system may support different report definition sets. In some embodiments, in which the wireless terminal supports multiple concurrent links to a plurality of base station attachment points, the wireless terminal 600 may, and sometimes does, select to use different report definition sets corresponding to the different attachment points during concurrent operations, e.g., a first report definition set to an attachment point of a first base station and a second report definition set to an attachment point of another base station. In some embodiments, the report definition set selection module 623 performs a selection as part of a traffic flow admission control operation. In various embodiments, the wireless terminal reconsiders the report definition set selection, e.g., and makes a new selection, which may be the same or different, in response to a traffic flow being terminated. In various embodiments, the wireless terminal reconsiders the report definition set selection, e.g., and makes a new selection, which may be the same or different, in response to an additional one or more traffic flows being admitted.

Report definition set selection module 623 includes a QoS counting module 625, a QoS based selection module 627, and a traffic type based selection module 629. QoS counting module 625 determines the number of distinct determined QoS profiles, e.g. corresponding to active traffic flows. The number of distinct QoS profiles corresponding to active traffic flows may be useful in efficiently communicating backlog information. For example, one report definition set may be structured to facilitate reporting of backlog information corresponding to two distinct QoS profiles, while another report definition set may be structured to facilitate reporting of backlog information corresponding to three distinct QoS profiles. QoS based selection module 627 selects the report definition set as a function of the number of distinct determined QoS profiles. Traffic type based selection module 629 selects a report definition set as a function of types of traffic flows which are active. Traffic type based selection module 629, in some embodiments, selects a first report definition set when only best effort traffic flows are active and selects another report definition set when at least one non-best effort traffic flow is active. In some embodiments, the traffic type based selection module 629 selects a report definition set as a function of the type of latency reporting to be used.

Report generation module 624 generates uplink request reports in accordance with the information to report bit mapping specified by the selected report definition set. At different times a different report definition set may have been selected to be in use by the wireless terminal. Report generation module 624 generates different bit size request reports, e.g. 1 bit size, 3 bit size, 4 bit size, for different report slots in accordance with the timing/frequency structure information 636. Traffic monitoring module 626 identifies active traffic flows. QoS profile determination module 628 determiners QoS profiles corresponding to at least some identified traffic flows, said determined QoS profiles being traffic flow information. Traffic flow type determination module 630 determines traffic flow information corresponding to identified active traffic flows indicating a type for at least some of the identified active traffic flows, e.g., a best effort flow, a latency constrained traffic flow, a first type of latency constrained traffic flow such as a traffic flow including voice traffic, a second type of latency constrained traffic flow such as a traffic flow including gaming traffic.

Data/information 618 includes system data/information 632, base station identification information 650, wireless terminal identification information 652, identified active traffic flows 654, traffic flow information 656, determined number of distinct QoS profiles 660, determined traffic flow type information 662, selected report definition set information 664, backlog information 666, delay information 668, and generated uplink request report 670. System data/information 632 includes a plurality of sets of report definition information (report definition set 1 information 634, ..., report definition set N information 636) and timing/frequency structure information 637.

Report definition set 1 information 634, e.g., information specifying a default request dictionary, includes 1 bit uplink request report mapping information 638, 3 bit uplink request report mapping information 640, and 4 bit uplink request report mapping information 642. Report definition set N information 636, e.g., information specifying a request dictionary N, includes 1 bit uplink request report mapping information 644, 3 bit uplink request report mapping information 646, and 4 bit uplink request report mapping information 648. The mapping information corresponding to at least one report is different between report definition set 1 information 634 and report definition set N information 636. Figures 10-32 provide examples of exemplary request dictionaries.

Timing/frequency structure information 536 includes, e.g., information specifying an uplink and a downlink timing structure, e.g., channel definition information and recurring timing structure information defining segments, transmission time intervals, and groupings of transmission time intervals. Figures 7-9 provide an example of exemplary timing and frequency structure information that may be included in information 637.

Base station identification information 650 includes information identifying a base station attachment point which the wireless terminal is currently using, e.g., including information identifying the base station, carrier frequency and/or tone block, and/or sector of the attachment point. In some embodiments, at least some different attachment points in the system support at least some different report definition sets.

Wireless terminal identification information 652 includes, e.g., a unique wireless terminal device identifier and a base station assigned wireless terminal identifier, e.g., a value associated with a dedicated control channel temporality allocated by the base station to the wireless terminal to use to communicate uplink control reports including request reports.

Identified active traffic flows 654 are, e.g., identified uplink traffic flows which are active and have been identified by traffic monitoring module 626. For example, a first active traffic flow may correspond to a voice application, a second active traffic flow may correspond to a gaming application, and a third active traffic flow may correspond to a data file transfer application. Identified active traffic flows 654 vary over time in response to the wireless terminal uplink traffic needs.

Traffic flow information 656 includes determined QoS profiles 658. Multiple active traffic flows can and sometimes do have the same QoS profile. For example, two active traffic flows may correspond to voice traffic. Determined number of distinct QoS profiles 660 is an output of QoS counting module 625 and is used in the report definition selection process. Determined traffic flow type information 662, in some embodiments, indicates on a per flow basis one of: a best effort traffic flow type and a latency constrained traffic flow type. Determined traffic flow type information 662 also indicates whether only best effort type flows are active, only non-best effort type flows, e.g., latency constrained flows are active, or whether there is a mixture of best effort and non-best effort flows active, with regard to flows being considered in the report definition set selection process. Determined traffic flow type information 662 may, and sometimes does include information identifying different types of latency constrained traffic flows, e.g., a voice traffic flow being a first type with a first level of latency requirements and a gaming traffic flow type being a second type with a second level of latency requirements being different from the first level of latency requirements. In some embodiments, determined traffic flow type information 662 identifies that one or more active traffic flows are to be reported using a specific type of latency reporting, e:g., minimum time to packet drop, time in a queue, classifications of frame counts with respect to predetermined latency limits, etc.

Selected report definition set information 664 is, e.g., an identifier value identifying one of the plurality of supported report definition sets (report definition set 1 info 634, ..., report definition set N information 636). Selected report definition set information 664 is an output of selection module 623 and is used by report generation module 624 as an input. In some embodiments, the report definition set, is at times selected by another device, e.g., a base station or a central controller, with the selection being communicated to the wireless terminal 600 for the wireless terminal to implement.

Backlog information 666 includes, e.g., count of frames of backlog of uplink traffic waiting to be transmitted, e.g., MAC frames of backlog waiting to be transmitted. In some embodiments, backlog information is tracked and/or reported corresponding to a number of distinct request groups. In some embodiments, backlog information is characterized and/or reported corresponding to whether or not the information is latency constrained. For example, there may be a backlog count corresponding to best effort backlog and a backlog count corresponding.to latency constrained backlog. Alternatively or in addition there may be a backlog count corresponding to total backlog and a backlog count corresponding to latency constrained backlog. In some embodiments, backlog information is characterized and/or reported corresponding to different degrees of latency, e.g., with respect to predetermined values. Different report definition sets may, and sometimes do, use different reporting techniques and/or variables for tracking and reporting backlog information.

Delay information 668 includes information identifying whether or not there is latency constrained uplink traffic in backlog. Delay information 668 also includes information identifying and/or specifying amounts of delay information, e.g., a time remaining before a packet drop, a time data has been waiting for transmission in a queue, a measure of delay time with respect to one or more limits, e.g., a predetermined time value used as a reference.

Generated uplink request report 670 is an output of report generation module 670, generated in accordance with the selected report definition set identified by information 664. At different times the size, e.g., 1 bit, 3 bit , or 4 bit of the generated uplink request reports is different in accordance with the timing frequency structure information 637 identifying the reporting slot. Generated uplink request report 670 conveys at least some of backlog information 666 and/or delay information 668. Generated uplink request report 670 use quantized reporting of backlog and/or delay information.

Figure 7 is a drawing 700 of exemplary uplink dedicated control channel (DCCH) segments in an exemplary uplink timing and frequency structure in an exemplary orthogonal frequency division multiplexing (OFDM) multiple access wireless communications system. The uplink dedicated control channel is used to send Dedicated Control Reports (DCR) from wireless terminals to base stations. Vertical axis 702 plots logical uplink tone index while horizontal axis 704 plots the uplink index of the halfslot within a beaconslot. In this example, an uplink tone block includes 113 logical uplink tones indexed (0, ..., 112); there are seven successive OFDM symbol transmission time periods within a halfslot, 2 additional OFDM symbol time periods followed by 16 successive half-slots within a superslot, and 8 successive superslots within a beacon slot. The first 9 OFDM symbol transmission time periods within a superslot are an access interval, and the dedicated control channel does not use the air link resources of the access interval.

The exemplary dedicated control channel is subdivided into 31 logical tones (uplink tone index 81 706, uplink tone index 82 708, ... , uplink tone index 111 710). Each logical uplink tone (81, ..., 111) in the logical uplink frequency structure corresponds to a logical tone indexed with respect to the DCCH channel (0, ..., 30).

For each tone in the dedicated control channel there are 40 segments in the beaconslot corresponding to forty columns (712, 714, 716, 718, 720, 722, ... , 724). The segment structure repeats on a beaconslot basis. For a given tone in the dedicated control channel there are 40 segments corresponding to a beaconslot 728; each of the eight superslots of the beaconslot includes 5 successive segments for the given tone. For example, for first superslot 726 of beaconslot 728, corresponding to tone 0 of the DCCH, there are five indexed segments (segment [0][0], segment [0][1], segment [0][2], segment [0][3], segment [0][4]). Similarly, for first superslot 726 of beaconslot 728, corresponding to tone 1 of the DCCH, there are five indexed segments (segment [1][0], segment [1][1], segment [1][2], segment [1][3], segment [1][4]). Similarly, for first superslot 726 of beaconslot 728, corresponding to tone 30 of the DCCH, there are five indexed segments (segment [30][0], segment [30][1], segment [30][2], segment [30][3], segment [30][4]).

In this example each segment, e.g., segment [0][0], comprises one tone for 3 successive half-slots, e.g., representing an allocated uplink air link resource of 21 OFDM tone-symbols. In some embodiments, logical uplink tones are hopped to physical tones in accordance with an uplink tone hopping sequence such that the physical tone associated with a logical tone may be different for successive half-slots, but remains constant during a given half-slot.

Each logical tone of the dedicated control channel may be assigned by the base station to a different wireless terminal using the base station as its current point of attachment. For example, logical tone (706, 708, ... , 710) may be currently assigned to (WT A 730, WT B 732, .... , WT N 734), respectively.

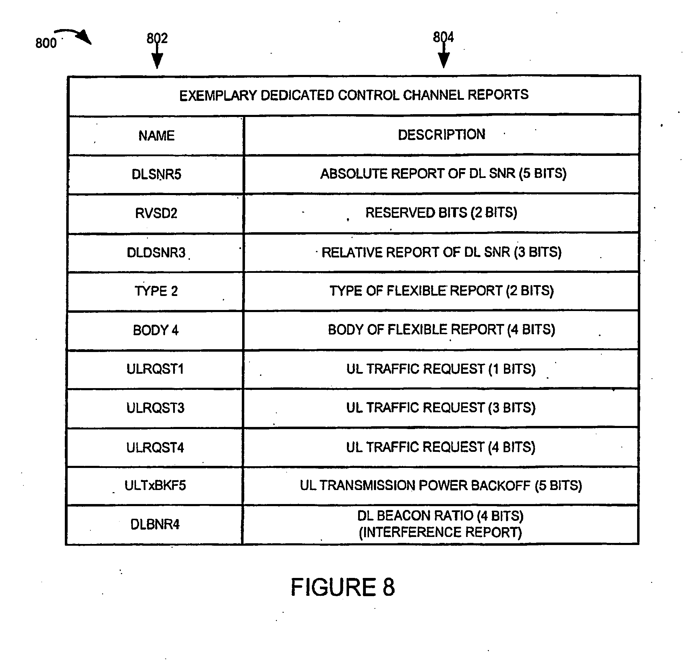

Each uplink DCCH segment is used to transmit a set of Dedicated Control Channel Reports (DCRs). A list of exemplary DCRs is given in table 800 of Figure 8. First column 802 of table 800 describes abbreviated names used for each exemplary report. The name of each report ends with a number which specifies the number of bits of the DCR. Second column 804 of table 800 briefly describes each named report.

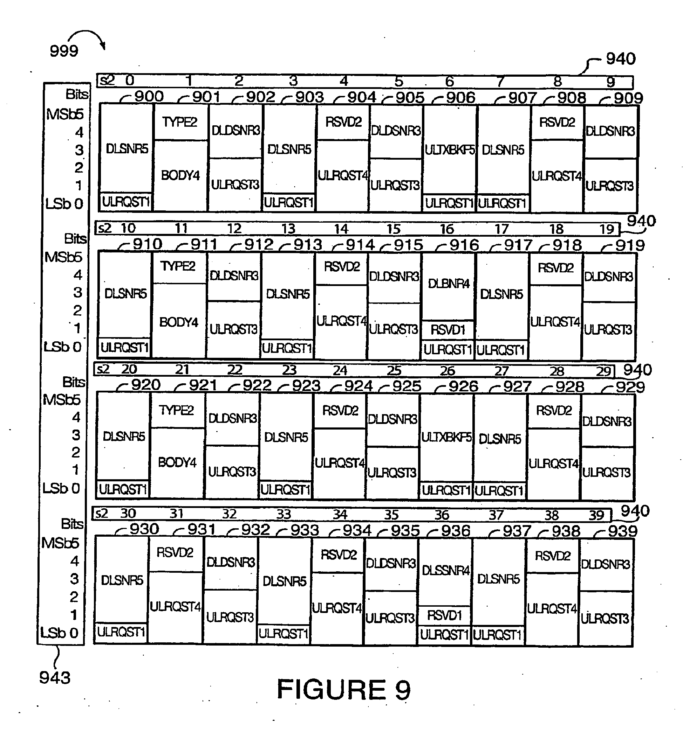

Figure 9 is a drawing 999 illustrating an exemplary reporting format information in an exemplary beaconslot for a given DCCH tone, e.g., corresponding to a wireless terminal. In Figure 9, each block (900, 901, 902, 903, 904, 905, 906, 907, 908, 909, 910, 911, 912, 913, 914, 915, 916, 917, 918, 919, 920, 921, 922, 923, 924, 925, 926, 927, 928, 929, 930, 931, 932, 933, 934, 935, 936, 937, 938, 939) represents one segment whose index s2 (0, ..., 39) is shown above the block in rectangular region 940. Each block, e.g., block 900 representing segment 0, conveys 6 information bits; each block comprises 6 rows corresponding to the 6 bits in the segment, where the bits are listed from the most significant bit to the least significant bit downwards from the top row to the bottom row as shown in rectangular region 943.

An exemplary wireless communications system supports a first plurality of request dictionaries. Various wireless terminals in the system support one or more of the first plurality of request dictionaries. Some wireless terminals in the wireless communications system support a second plurality of request dictionaries, said second plurality of request dictionaries being a subset of said first plurality of request dictionaries. Different wireless terminals may, and sometimes do, support different second pluralities of request dictionaries. One request dictionary may include a first set of bit mapping definition information for the 1 bit uplink request report, the 3 bit uplink request report and 4 bit uplink request reports, ULRQST 1, ULRQST3 and ULRQST4 of table 800; while another request dictionary may include a different set of bit mapping definition information for at least one of the 1 bit uplink request report, 3 bit uplink request report and 4-bit uplink request reports of table 800. A wireless terminal supporting multiple alternative request dictionaries can transmit uplink request reports using one of its supported multiple alternative request dictionaries. In some embodiments, the request dictionary selected to be used by the wireless terminal depends on the active traffic flows at the wireless terminal.

In some embodiments, the wireless terminal can, and sometimes does, perform the selection of which request dictionary to use at a given time. In some embodiments, another node, e.g., a base station, can, and sometimes does, performs the selection of which request dictionary to use corresponding to a wireless terminal at a given time. Regardless of whether the wireless terminal or the base station selects a request dictionary to use for a given wireless terminal during a given time, there is an understanding between the base station and the wireless terminal as to which request dictionary is being used, e.g., via signaling exchanged between the base station and wireless terminal, such that both the base station and wireless terminal are aware and in agreement of the request dictionary being used.

Different request dictionaries are structured to accommodate different reporting needs, thus facilitating more efficient reporting for requests than would otherwise be possible if only one dictionary was available. In some embodiments, a wireless terminal supports a plurality of different request dictionaries for uplink request reports, at least some of the different request dictionaries include a format conveying backlog information and delay information and at least some of the request dictionaries include a format conveying backlog information without delay information.

Various exemplary request dictionaries including a format conveying backlog information without delay information will now be described. In an exemplary embodiment, for any of request dictionaries with reference number = 0, 1, 2, or 3 the WT uses an ULRQST1 according to Table 1000 of Figure 10 to report $N[0]+N[1]$. Table 1000 is an exemplary format for an ULRQST1 report. First column 1002 indicates the two possible bit patterns that may be conveyed while second column 1004 indicates the meaning of each bit pattern. If the bit pattern is 0, that indicates that there are no MAC frames that the WT intends to transmit in either request group 0 or request group 1. If the bit pattern is 1, that indicates that the WT has at least one MAC frame in request group 0 or request group 1 that the WT intends to communicate.

At a given time, the WT uses only one request dictionary. When the WT just enters the ACTIVE state, the WT uses the default request dictionary. To change the request dictionary, the WT and the base station uses an upper layer configuration protocol. When the WT migrates from the ON state to the HOLD state, the WT keeps the last request dictionary used in the ON state so that when the WT migrates from the HOLD state to the ON state later, the WT continues to use the same request dictionary until the request dictionary is explicitly changed. However, if the WT leaves the ACTIVE state, then the memory of the last request dictionary used is cleared.

To determine an ULRQST3 or ULRQST4 corresponding to any of request dictionaries with reference number = 0, 1, 2, or 3, the WT first calculates the following two parameters, y and z, in accordance with table 1100 and then use one of the request dictionaries with reference number = 0, 1, 2, or 3. Denote by x the value (in dB) of the most recent 5 bit uplink transmission power backoff report (ULTXBKF5) report, and by $b_0$ the value in (dB) of the most recent generic 4 bit downlink beacon ratio report (DLBNR4). The WT further determines an adjusted generic DLBNR4 report value b as follows: $b= b_0$ -ulTCHrateFlashAssignmentOffset, where minus is defined in the dB sense. The base station sector broadcasts the value of ulTCHrateFlashAssignmentOffset in a downlink broadcast channel. The WT uses ulTCHrateFlashAssignmentOffset equal to 0dB until the WT receives the value from the broadcast channel.

Figure 11 is an exemplary table 1100 used to calculate control parameters y and z corresponding to request dictionaries with reference number = 0, 1, 2, or 3. First column 1102 lists a condition; second column 1104 lists the corresponding value of output control parameter y; third column 1106 lists the corresponding value of output control parameter z. Given x and b, the WT determines y and z as those from the first row in Table 1100 of Figure 11 for which the condition in the first column is satisfied. For example, if x =17 and b=3, then $z=\min(4,N_{max})$ and y=1. Denote $R_{max}$ the highest rate option that the WT can support, and $N_{max}$ the number of MAC frames of that highest rate option.

The WT uses an ULRQST3 or ULRQST4 to report the actual N[0:3] of the MAC frame queues according to a request dictionary. Various request dictionaries are identified by a request dictionary (RD) reference number.

The exemplary request dictionaries show that any ULRQST4 or ULRQST3 report may not completely include the actual N[0:3]. A report is in effect a quantized version of the actual N[0:3].

Table 1200 of Figure 12 and Table 1300 of Figure 13 define an ULRQST4 report format and an ULRQST3 report format for an exemplary request dictionary with the RD reference number equal to 0. Define $d_{123}=\text{ceil}((\ (N\ [1]\ +N\ [2]\ +N\ [3]-N_{123,min})\ /\ (y*g))$, where $N_{123,min}$ and g are variables determined by the most recent ULRQST4 report as per Table 1200. Figure 12 is a table 1200 identifying bit format and interpretations associated with each of 16 bit patterns for a four bit uplink request, ULRQST4, corresponding to an exemplary first request dictionary (RD reference number = 0). In some embodiments, the request dictionary with reference number = 0 is the default request dictionary. First column 1202 identifies the bit pattern and bit ordering, most significant bit to least significant bit. Second column 1204 identifies the interpretation associated with each bit pattern. Figure 13 is a table 1300 identifying bit format and interpretations associated with each of 8 bit patterns for a three bit uplink request, ULRQST3, corresponding to an exemplary first request dictionary (RD reference number = 0). In some embodiments, the request dictionary with reference number = 0 is the default request dictionary. First column 1302 identifies the bit pattern and bit ordering, most significant bit to least significant bit. Second column 1304 identifies the interpretation associated with each bit pattern.

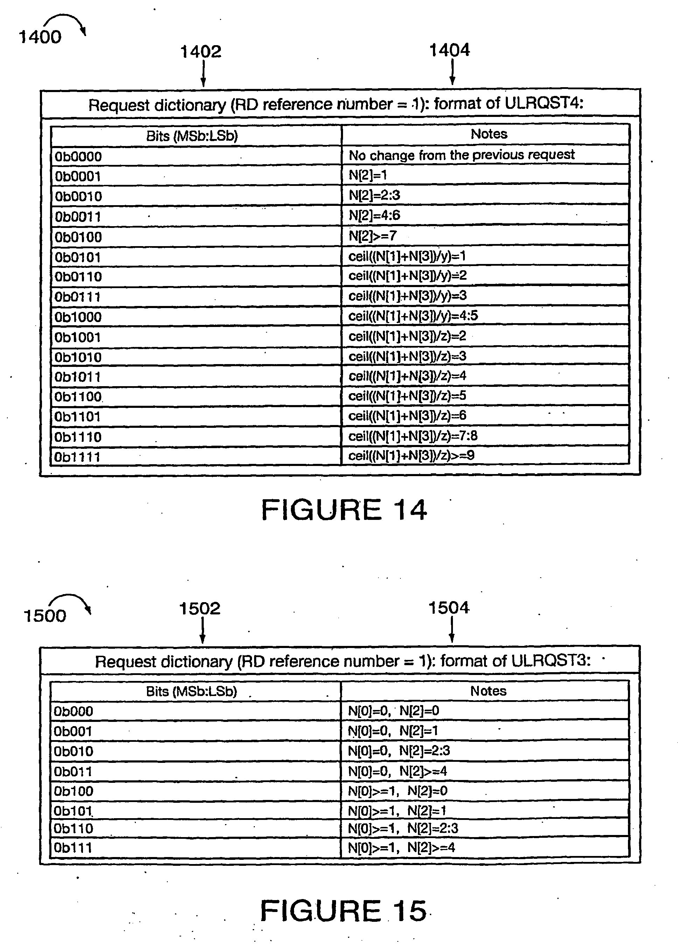

Table 1400 of Figure 14 and Table 1500 of Figure 15 define information of an exemplary request dictionary with the RD reference number equal to 1. Figure 14 is a table 1400 identifying bit format and interpretations associated with each of 16 bit patterns for a four bit uplink request, ULRQST4, corresponding to an exemplary second request dictionary (RD reference number = 1). First column 1402 identifies the bit pattern and bit ordering, most significant bit to least significant bit. Second column 1404 identifies the interpretation associated with each bit pattern. Figure 15 is a table 1500 identifying bit format and interpretations associated with each of 8 bit patterns for a three bit uplink request, ULRQST3, corresponding to an exemplary second request dictionary (RD reference number = 1). First column 1502 identifies the bit pattern and bit ordering, most significant bit to least significant bit. Second column 1504 identifies the interpretation associated with each bit pattern.

Table 1600 of Figure 16 and Table 1700 of Figure 17 define information of an exemplary request dictionary with the RD reference number equal to 2. Figure 16 is a table 1600 identifying bit format and interpretations associated with each of 16 bit patterns for a four bit uplink request, ULRQST4, corresponding to an exemplary third request dictionary (RD reference number = 2). First column 1602 identifies the bit pattern and bit ordering, most significant bit to least significant bit. Second column 1604 identifies the interpretation associated with each bit pattern. Figure 17 is a table 1700 identifying bit format and interpretations associated with each of 8 bit patterns for a three bit uplink request, ULRQST3, corresponding to an exemplary third request dictionary (RD reference number = 2). First column 1702 identifies the bit pattern and bit ordering, most significant bit to least significant bit. Second column 1704 identifies the interpretation associated with each bit pattern.

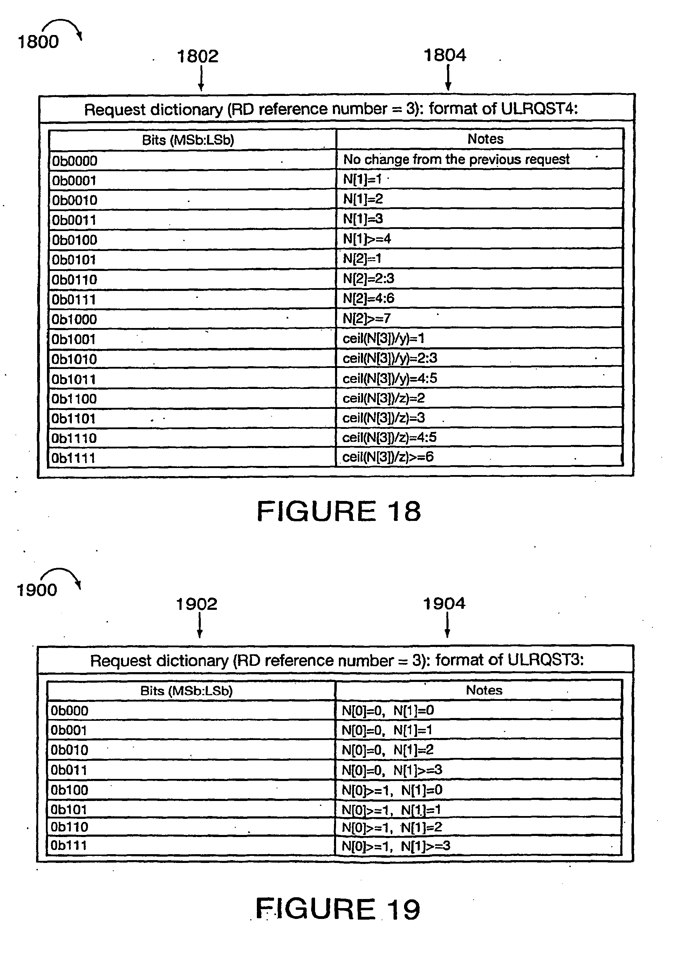

Table 1800 of Figure 18 and Table 1900 of Figure 19 define information of an exemplary request dictionary with the RD reference number equal to 3. Figure 18 is a table 1800 identifying bit format and interpretations associated with each of 16 bit patterns for a four bit uplink request, ULRQST4, corresponding to an exemplary fourth request dictionary (RD reference number = 3). First column 1802 identifies the bit pattern and bit ordering, most significant bit to least significant bit. Second column 1804 identifies the interpretation associated with each bit pattern. Figure 19 is a table 1900 identifying bit format and interpretations associated with each of 8 bit patterns for a three bit uplink request, ULRQST3, corresponding to an exemplary fourth request dictionary (RD reference number = 3). First column 1902 identifies the bit pattern and bit ordering, most significant bit to least significant bit. Second column 1904 identifies the interpretation associated with each bit pattern.

Various exemplary request dictionaries including a format conveying backlog information and delay information will now be described. In various embodiments, when using some request dictionaries a wireless terminal provides delay information for uplink traffic backlog. In order to enable a base station (BS) to provide adequate quality of service (QoS) in the uplink, the wireless terminal (WT), in some embodiments, periodically transmits control information to the BS. For example, this control information includes, in some embodiments, of one or more of the following: amount of backlog, i.e., queue length, at the WT, power availability at the WT and information pertaining to interference management, such as, e.g., path loss ratio or beacon.ratio reports. However, a scheduler, in addition to the information listed above, could also beneficially use information related to delay in order to make timely decisions when scheduling delay-sensitive traffic, for at least some types of traffic flows. Examples of such delay-sensitive traffic, in which a request dictionary including delay information would be beneficial, include voice, gaming and other interactive applications.

Delay information can, in some embodiments, take one of the following two forms. (1) The maximum queuing delay across each of the packets in the WT's queue. In the case where the WT has multiple queues, each for a different traffic flow, the maximum could, in some embodiments, be computed across the packets in one or more queues. Note that each of these queues could represent traffic with different QoS requirements. Typically, this maximum would be calculated for packets that belong to delay-sensitive traffic flows. (2) The minimum time remaining to scheduling deadline across each of the packets in the WT's queue. Once again, if the WT has multiple queues, each for a different traffic flow, the minimum could, in some embodiments, be calculated for packets with latency or delay constraints.

The delay information itself can be reported in several ways. In an exemplary system, e.g., an exemplary OFDM wireless communications system, for example, the delay information can be transmitted using request dictionaries. An exemplary request dictionary, in some exemplary embodiment, includes a plurality of different bit size request reports, e.g., the exemplary request dictionary includes a 1 bit, a 3-bit and a 4-bit request report. Each of these reports is used to provide information pertaining to the backlog across traffic flows at the WT.

In some embodiments in which delay information is to be communicated, a 1-bit report, for example, can be used to simply indicate the presence of traffic with time remaining to deadline less than T ms. For example, T could equal 20ms. Table 2000 of Figure 20 illustrates an exemplary 1 bit-uplink request report ULRQST 1 format that may be part of exemplary request dictionaries A, B and C. The remaining report types, e.g., ULRQST3 and ULRQST4 of the request dictionary are, e.g., used to provide more detailed backlog information, such as time remaining to deadline and total backlog, for the traffic flows. More precisely, each of these request reports could be used to convey one or both of deadline and total backlog information. This is illustrated below using several examples.

Let D denote the minimum time remaining, in milliseconds, to the scheduling deadline for each of the packets in the WT's queues. Let N denote the total backlog at the WT, e.g., a MAC frame count. Using these notations, the 3-bit and 4-bit reports are as follows.

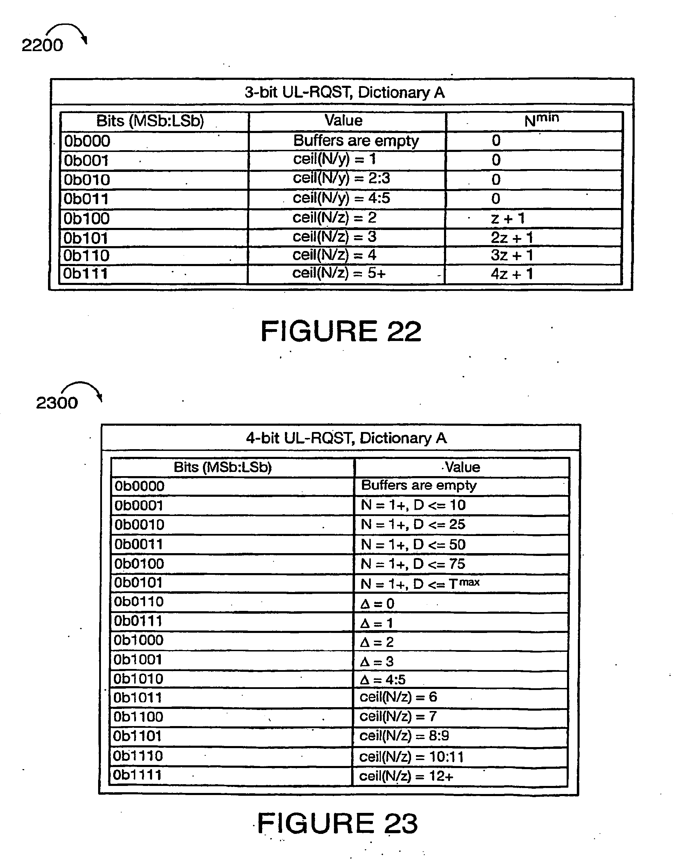

In one illustrative example of a request dictionary, Dictionary A as represented by Table 2200 of Figure 22 and Table 2300 of Figure 23, the WT only transmits total backlog information in the 3-bit report. The 4-bit report, on the other hand is used to transmit either delay information or total backlog information. In this exemplary embodiment, the 3-bit report depends on two control factors, y and z, which, in turn, depend on a previous power report, e.g., the last reported uplink DCCH backoff report, x, and a previous interference report, e.g., the last reported beacon ratio report, $b_{actual}$. The WT then calculates $b$, the "adjusted generic beacon ratio", to be equal to $b_{actual}$ - BEACON_RATIO_OFFSET. Finally, let $R_{max}$ be

the maximum rate option that the WT can support, and $N_{max}$ be the number of MAC frames corresponding to that rate option. An example of determining exemplary control factors is shown in Table 2100. In Table 2100, first column 2102 lists various test conditions; second column 2104 lists corresponding values for control factor y for each condition; third column 2106 lists corresponding values for control factor z corresponding for each condition. In Table 2100, given x and b, the values of y and z should be taken as those from the first row, proceeding from top to bottom, for which the condition in the first column is satisfied.

In the 4-bit report of the format of table 2300 of Figure 23, the WT transmits the time remaining to deadline information D whenever D < $T^{max}$. For example, $T^{max}$ = 100ms. Otherwise, it transmits backlog information.

Define $\Delta = \left\lceil \dfrac{N - N^{min}}{y} \right\rceil$, where $N^{min}$ is determined based on the value of N at the time of the last 3-bit report, using Table 2200 of Figure 22.

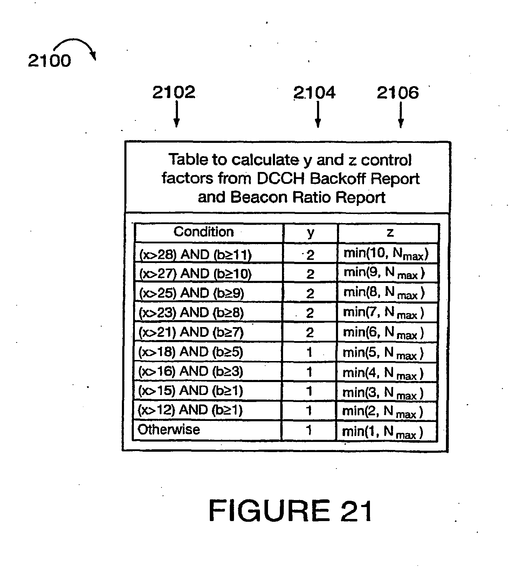

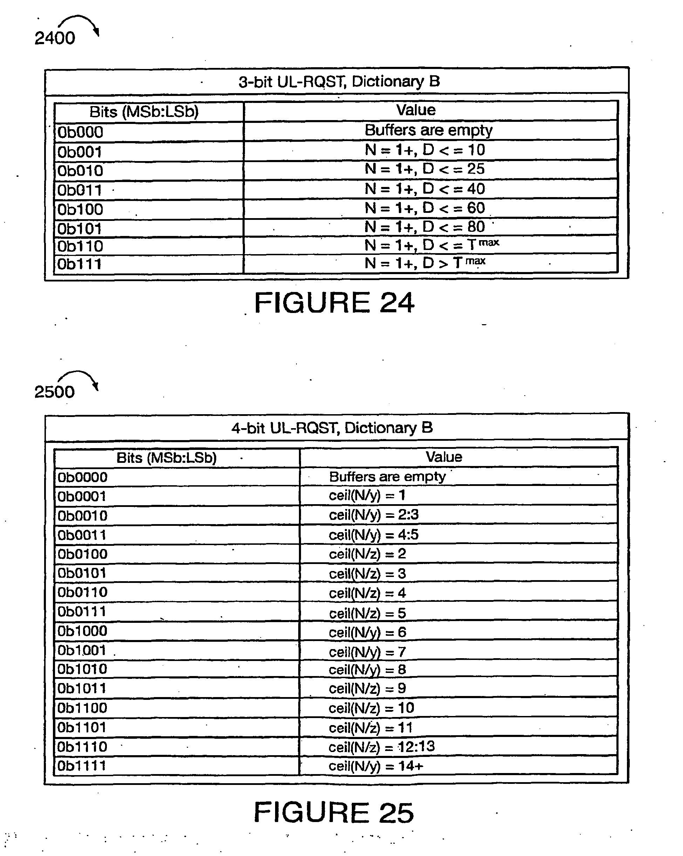

In yet another illustrative example of a request dictionary, Dictionary B represented by table 2400 of Figure 24 and Table 2500 of Figure 25, the WT transmits delay information in the 3-bit report using the format of table 2400 of Figure 24. The 4-bit report with format of table 2500 of Figure 25, on the other hand is used to transmit total backlog information. The control factors y and z used for the 4-bit report are determined from DCCH backoff report and adjusted beacon ratio report in a manner described above with regard to Table 2100 of Figure 21.

In yet another illustrative example of a request dictionary, Dictionary C represented by table 2600 of Figure 26 and table 2700 of Figure 27, the WT -as in Dictionary B above - transmits delay information in the 3-bit report using the format of table 2600 of Figure 26. However, in the 4-bit report with the format of table 2700 of Figure 27, the reporting format supports the transmission of total backlog information and the transmission of backlog information corresponding to a deadline. In a report in accordance with the format of table 2700 of Figure 27, the WT can transmit information indicative of at least one of: (i) the total backlog such as the number of N frames of total backlog and (ii) the number of frames, $N_D$, with time remaining to deadline <= $D^{max}$, $D^{max}$, for example could equal 50ms. In yet another example, $D^{max}$ could equal $T^{max}$.

The examples above illustrate that several request dictionaries can be constructed where request reports, e.g., the 3-bit and/or 4-bit request reports, contain one or more of the following: (1) delay information, (2) total backlog information, e.g., frame count information N, (3) backlog information for some of the traffic flows, (4) total backlog with time remaining to deadline less than some value, e.g., frame count information $N_D$, and (5) a refinement of the request information carried in a previous report, e.g., the previous 3-bit request report, 4-bit request report or the previous request report communicated.

Note that the bit sizes for the request reports in the examples above, e.g., 1 bit, 3 bit, 4 bit, are exemplary, and in other embodiments, different bit size request reports may be used.

Additional request dictionaries, request dictionary D and request dictionary E shall be described which uses three different bit size request reports for uplink traffic, ULRQST1, ULRQST3 and ULRQST4, and which supports the communication of delay information.

The WT uses an ULRQST1, ULRQST3 or ULRQST4 to report the status of the MAC frame queues at the WT transmitter.

The WT transmitter maintains MAC frame queues, which buffers the MAC frames to be transmitted over the link. The MAC frames are converted from the LLC frames, which are constructed from packets of upper layer protocols. Any packet may belong to one of a predetermined number of designated transmission streams. In this exemplary embodiment consider an implementation with 16 transmission streams, if a packet belongs to one stream, then all MAC frames of that packet also belong to that stream.

The WT reports the number of MAC frames in the 16 streams that the WT may intend to transmit. In the ARQ protocol, those MAC frames shall be those marked as "new" or "to be retransmitted". The WT should maintain two vectors of sixteen elements N[0:15] and D[0:15], and shall maintain three scalars $N_T$, $N_D$, and $D_{min}$: for k=0:15, N[k] represents the number of MAC frames that the WT intends to transmit in request group k, while D[k] represents the minimum time remaining to transmission deadline for the packets that the WT intends to transmit in stream k. Furthermore,

$$D_{min} = \min_{\{k\,=\,0:15\}} D[k],$$

$$N_T = N[0] + N[1] + N[2] + \ldots + N[15],$$

and
$N_D$ = number of MAC frames with time remaining to transmission deadline $\leq T_M$, where $T_M$ = 20ms. The WT should report information about $N_T$, $N_D$, and/or $D_{min}$ to the base station sector so that the base station sector can utilize the information in an uplink (UL) scheduling algorithm to determine the assignment of uplink traffic channel (UL.TCH) segments.

For either of request dictionary D or request dictionary E, the WT uses an ULRQST1 to report $N_D$ according to Table 2800 of Figure 28.

Let D denote the minimum time remaining, in milliseconds, to the scheduling deadline for all packets in the WT's transmission queues under consideration. Let N denote the total backlog at the WT. Using these notations, the 3-bit and 4-bit reports of request dictionaries D and E are as follows.

The WT uses ULRQST3 or ULRQST4 to report one or more of $N_T$, $N_D$, or $D_{min}$ according to a request dictionary D or request dictionary E. The request dictionaries D and E show that any given instance of a ULRQST3 or ULRQST4 report may not completely contain the actual values of $N_T$, $N_D$, or $D_{min}$. A report is in effect a quantized version of the actual values of $N_T$, $N_D$, or $D_{min}$. A general guideline is that the WT should send a report to minimize the discrepancy between the reported and actual values of $N_T$, $N_D$, or $D_{min}$. However, the WT has the flexibility of determining a report to benefit the WT the most. For example, when the WT is using request dictionary D, the WT may use ULRQST4 to report $N_T$ in some cases and $N_D$ in others. Furthermore, in instances where the WT reports $N_T$, it may not automatically imply that $N_D=0$.

To determine ULRQST3 or ULRQST4 corresponding to request dictionaries D and E, the WT first calculates the following two parameters, y and z, e.g., in accordance with table 2100 of Figure 21 and then uses one of the following dictionaries. Denote by x the value (in dB) of the most recent ULTXBKF5 report, and by $b_0$ the value (in dB) of the most recent generic DLBNR4 report. An exemplary range for x is 6.5dB to 40 dB. An exemplary range for $b_0$ is - 3dB to 26 dB. The WT further determines an adjusted generic DLBNR4 report value b as follows: b = $b_0$ - ulTCHrateFlashAssignmentOffset, where minus is defined in the dB sense. Given x and b, the WT determines y and z as those from the first row in table 2100 of Figure 21 for which the condition in the first column is satisfied. For example, if x = 17 and b = 1, then z = min(3, $N_{max}$) and y = 1. Denote $R_{max}$ the highest rate option that the WT can support, and $N_{max}$ the number ofMAC frames that can be transmitted in that rate option.

Table 2900 of Figure 29 and Table 3000 of Figure 30 define an exemplary request dictionary D.

Table 3100 of Figure 31 and Table 3200 of Figure 32 define an exemplary request dictionary E. Note that the request dictionary E format does not directly communicate a delay value; however request dictionary E does support the indirect communication of delay information by means of using two backlog count variables, $N_T$ and $N_D$.

Define $\Delta = \left\lceil \dfrac{N_T - N_T^{min}}{y * g} \right\rceil$, , where $N_T^{min}$ and g are variables determined by the most recent ULRQST4 as per Table 3100 of Figure 31.

Exemplary request dictionaries with reference numbers 0, 1, 2, and 3 represent various examples where a request dictionary reports backlog information without delay information. Exemplary request dictionaries A, B, C; D and E represent various examples where a request dictionary reports backlog information and delay information.

Exemplary criteria for selection of a request dictionary will now be described. For example, if the active traffic flows are best effort flows, then exemplary request dictionary reference number 0 (RD=0) can be selected and advantageously used. If the WT has traffic flows that belong to one of two distinct QoS profiles - for example, different link sharing weights - request dictionary with reference number 1 or 2 (RD=1 or RD=2) can be selected and advantageously used. If the WT has traffic flows that belong to one of three distinct QoS profiles - for example, different link sharing weights, and/or delay constraints - request dictionary with reference number 3 (RD=3) can be selected and advantageously used.

If some of the active traffic flows of the wireless terminal have delay or latency constraints and the rest are simply best-effort flows, then any one of the request dictionaries A, B, C, D or E can be selected and advantageously used.

Consider an example, where the wireless terminal's active traffic flows satisfy more than one of the above-described conditions. In one example, consider the situation where the WT has active voice traffic and best-effort traffic at a given time. In that case, the WT could use request dictionary with reference number = 2 or any of the exemplary request dictionaries A, B, C, D or E.

While described in the context of an OFDM system, the methods and apparatus of various embodiments, are applicable to a wide range of communications systems including many non-OFDM and/or non-cellular systems.

In various embodiments nodes described herein are implemented using one or more modules to perform the steps corresponding to one or more methods, for example, signal processing, selection of a request dictionary, determination of a request dictionary, communication of a request dictionary, generation of request reports in accordance with a determined request dictionary, and/or recovery of request report information in accordance with a determined request dictionary. In some embodiments various features are implemented using modules. Such modules may be implemented using software, hardware or a combination of software and hardware. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, various embodiments are directed to a machine-readable medium including machine executable instructions for causing a machine, e.g., processor and associated hardware, to perform one or more of the steps of the above-described method(s).

Numerous additional variations on the methods and apparatus described above will be apparent to those skilled in the art in view of the above descriptions. Such variations are to be considered within scope. The methods and apparatus of various embodiments may be, and in various embodiments are, used with CDMA, orthogonal frequency division multiplexing (OFDM), and/or various other types of communications techniques which may be used to provide wireless communications links between access nodes and mobile nodes. In some embodiments the access nodes are implemented as base stations which establish communications links with mobile nodes using OFDM and/or CDMA. In various embodiments the mobile nodes are implemented as notebook computers, personal data assistants (PDAs), or other portable devices including receiver/transmitter circuits and logic and/or routines, for implementing the methods of various embodiments.

**Claims**

1. A method (400) of operating a communications device, the method comprising:

    selecting (410) a report definition set to be used in communicating backlog information from a plurality of alternative report definition sets, alternative report definition sets providing alternative mappings of report bits to information to be communicated for at least one report type; and performing (426) one of:

        i) generating a report using an information to report bit mapping specified by the selected report definition set and
        ii) processing a received report to recover information included in the received report in accordance with the information to report bit mapping specified by the selected report definition set; further comprising

    identifying active traffic flows; and wherein said selection is performed as a function of traffic flow information corresponding to said identified active traffic flows; wherein the traffic flow information corresponding to said identified active traffic flows indicates a traffic flow type for at least some of said identified active traffic flows; and wherein the traffic flow type indicates one of: a best effort traffic flow and a latency constrained traffic flow.

2. The method of claim 1, further comprising:

    determining (406) QoS profiles corresponding to at least some identified active traffic flows, said determined QoS profiles being said traffic flow information; and wherein said selection includes using said QoS profiles to select a report definition set.

3. The method of claim 2, wherein using said QoS profiles to select a report definition set includes:

    determining (422) the number of distinct determined QoS profiles; and selecting (424) the report definition set as a function of the number of distinct determined QoS profiles.

4. The method of claim 1, wherein selecting a report definition set includes selecting (416) a first report definition set when only best effort traffic flows are active and selecting another report definition set when at least one non-best effort traffic flow is active.

5. The method of claim 1, wherein traffic flow type information for different latency constrained traffic flows indicates different types of latency reporting to be used; and wherein selecting a report definition set includes selecting (418) a report definition set as a function of the type of latency reporting to be used.

6. The method of claim 1 wherein said selected report definition set includes at least two different fixed size request report definitions corresponding to reports of different bit sizes.

7. The method of claim 6 wherein said report definition sets are uplink request report definition sets which are used to define uplink reports requesting allocation of uplink traffic resources in a system using a dedicated control channel for communicating reports including said uplink reports.

8. The method of claim 1, wherein said selection is performed (420) as a function of a number of request groups on which information is to be reported.

9. The method of claim 1, wherein said selecting is performed by one of a wireless terminal and a base station.

10. The method of claim 1, wherein said selecting is performed as part of a traffic flow admission control operation.

11. A communications device (500, 600), comprising:

    means for selecting (523, 526) a report definition set to be used in communicating backlog information from a plurality of alternative report definition sets, alternative report definition sets providing alternative mappings of report bits to information to be communicated for at least one report type; and at least one of:

i) means for generating (624) a report using an information to report bit mapping specified by the selected report definition set; and
ii) means for processing (524) a received report to recover information included in the received report in accordance with the information to report bit mapping specified by the selected report definition set; further comprising

means (526, 626) for monitoring traffic for identifying active traffic flows (562, 654); and wherein said means for selecting is adapted to perform said selection as a function of traffic flow information corresponding to said identified active traffic flows; further comprising
means (530, 630) for determining traffic flow type information (569, 662) corresponding to at least some of said identified active traffic flows, said traffic flow type information being included in said traffic flow information used by said means for selecting a report definition set;

wherein the traffic flow type information corresponding to a traffic flow indicates one of a best effort traffic flow and a latency constrained traffic flow.

12. The communications device of claim 11, further comprising:

means (528, 628) for determining QoS profiles (570, 658) corresponding to at least some identified active traffic flows, said determined QoS profiles being said traffic flow information; and wherein said means for selecting is adapted to use QoS profiles to select a report definition set.

13. The communications device of claim 12, wherein said means for selecting a report definition set includes:

means (525, 625) for determining the number (566, 660) of distinct determined QoS profiles; and
means (527, 627) for selecting the report definition set as a function of the number of distinct determined QoS profiles.

14. The communications device of claim 11, wherein:

the means for selecting comprises a report definition set selection module for selecting said report definition set to be used in communicating backlog information

and wherein

i) means for generating a report comprises a report generation module for generating a report using an information to report bit mapping specified by the selected report definition set; and
ii) means for processing a received report comprises a report processing module for processing a received report to recover information included in the received report in accordance with the information to report bit mapping specified by the selected report definition set.

15. The communications device of claim 14, further comprising:

a traffic monitoring module (526,626) for identifying said active traffic flows; and
wherein said selection module is adapted to perform said selection as a function of said traffic flow information corresponding to said identified active traffic flows.

16. The communications device of claim 15, further comprising:

a QoS profile determination module (528, 628) for determining QoS profiles corresponding to at least some identified active traffic flows, said determined QoS profiles being traffic flow information; and
wherein said selection module is adapted to use QoS profiles to select a report definition set.

17. The communications device of claim 16, wherein said report definition set selection module includes:

a QoS counting module (525, 626) for determining the number of distinct determined QoS profiles; and
a QoS based selection module (527, 627) for selecting the report definition set as a function of the number of distinct determined QoS profiles.

18. The communications device of claim 15, said means for determining traffic flow type information comprising:

a traffic flow type determination module (530, 630) for determining said traffic flow type information corresponding to said identified active traffic flows indicating a traffic flow type for at least some of said identified active traffic flows.

19. The communications device of claim 18, wherein the traffic flow type indicates one of: a best effort traffic flow and a latency constrained traffic flow.

20. The communications device of claim 19, wherein said report definition set selection module includes:

    a traffic type based report selection module (529, 629) for selecting a first report definition set when only best effort traffic flows are active and selecting another report definition set when at least one non-best effort traffic flow is active.

21. The communications device of claim 19, wherein traffic flow type information for different latency constrained traffic flows indicates different types of latency reporting to be used; and wherein said report definition set selection module includes:

    a traffic type based report selection module for selecting a report definition set as a function of the type of latency reporting to be used.

22. The communications device of claim 15 wherein said selected report definition set includes at least two different fixed size request report definitions corresponding to reports of different bit sizes.

23. The communications device of claim 22 wherein said report definition sets are uplink request report definition sets which are used to define uplink reports requesting allocation of uplink traffic resources in a system using a dedicated control channel for communicating reports including said uplink reports.

24. The communications device of claim 15, further comprising memory including a plurality of stored report definition sets.

25. The communications device of claim 24, wherein said communications device is a base station (500).

26. The communications device of claim 24, wherein said communications device is a wireless terminal (600).

27. A computer readable medium embodying machine executable instructions for controlling a communications device to implement a method according to any of claims 1 to 10.

**Patentansprüche**

1. Verfahren (400) zum Betreiben eines Kommunikationsgeräts, das Verfahren aufweisend:

    Auswählen (410) eines Berichtdefinitionssatzes zum Verwenden für die Übertragung von Rückstand-Informationen von einer Vielzahl von alternativen Berichtdefinitionssätzen, wobei die alternativen Berichtdefinitionssätze alternative Zuordnungen von Berichtbits zu den zu übertragenden Informationen für zumindest einen Berichttyp bereitstellen; und
Durchführen (426) einer von:

    i) Erzeugen eines Berichts mittels Verwendung einer Zuordnung zwischen Informationen und Berichtbits, die von dem ausgewählten Berichtdefinitionssatz spezifiziert sind und
    ii) Verarbeiten eines empfangenen Berichts zum Widerherstellen von Informationen, die in dem empfangenen Bericht gemäß der Zuordnung von Informationen und Berichtbits enthalten sind und von dem ausgewählten Berichtdefinitionssatz spezifiziert sind; ferner aufweisend

    Bestimmen von aktiven Verkehrsflüssen; und wobei die Auswahl als eine Funktion von Verkehrsflussinformation, die den bestimmten aktiven Verkehrsflüssen entspricht, durchgeführt wird;
    wobei die Verkehrsflussinformation, die den bestimmten aktiven Verkehrsflüssen entspricht, einen Verkehrsflusstyp für zumindest einige der bestimmten aktiven Verkehrsflüsse anzeigt; und
    wobei der Verkehrsflusstyp einen von einem "Best Effort"-Verkehrsfluss und einem Latenzgebunden-Verkehrsfluss anzeigt.

2. Verfahren nach Anspruch 1, ferner aufweisend:

    Feststellen (406) von QoS-Profilen, die zumindest einigen bestimmten aktiven Verkehrsflüssen entsprechen, wobei die bestimmten QoS-Profile die Verkehrsflussinformationen sind; und wobei die Auswahl das Verwenden der QoS-Profile zum Auswählen eines Berichtdefinitionssatzes umfasst.

3. Verfahren nach Anspruch 2, wobei das Verwenden der QoS-Profile zum Auswählen eines Berichtdefinitionssatzes umfasst:

    Feststellen (422) der Anzahl von unterschiedlichen festgestellten QoS-Profilen; und
    Auswählen (424) des Berichtdefinitionssatzes als eine Funktion der Anzahl von unterschiedlichen festgestellten QoS-Profilen.

4. Verfahren nach Anspruch 1, wobei das Auswählen eines Berichtdefinitionssatzes umfasst Auswählen (416) eines ersten Berichtdefinitionssatzes wenn nur "Best Effort"-Verkehrsflüsse aktiv sind und Auswählen eines anderen Berichtdefinitionssatzes wenn zumindest ein "Non Best Effort"-Verkehrsfluss aktiv ist.

5. Verfahren nach Anspruch 1, wobei die Verkehrsflusstypinformation für unterschiedliche Latenzgebundenenverkehrsflüsse unterschiedliche Arten von zu verwendenden Latenzberichten anzeigt; und wobei das Auswählen eines Berichtdefinitionssatzes das Auswählen (418) eines Berichtdefinitionssatzes als eine Funktion der Art von zu verwendenden Latenzberichten umfasst.

6. Verfahren nach Anspruch 1, wobei der ausgewählte Berichtdefinitionssatz zumindest zwei unterschiedliche Berichtanfragedefinitionen fester Größe umfasst, die Berichten von unterschiedlichen Bitgrößen entsprechen.

7. Verfahren nach Anspruch 6, wobei die Berichtdefinitionssätze Aufwärtsberichtanforderungsdefinitionssätze sind, die zum Definieren von Aufwärtsberichten verwendet werden, die eine Zuordnung von Aufwärtsverkehrsressourcen in einem System anfordern, mittels eines dedizierten Kontrollkanals zum Kommunizieren von Berichten, die die Aufwärtsberichte umfassen.

8. Verfahren nach Anspruch 1, wobei das Auswählen als eine Funktion einer Anzahl der Anfragengruppen auf denen Informationen zu berichten sind durchgeführt (420) wird.

9. Verfahren nach Anspruch 1, wobei das Auswählen von einem von einem drahtlosen Gerät und einer Basisstation durchgeführt wird.

10. Verfahren nach Anspruch 1, wobei das Auswählen als Teil einer Verkehrsflusszugangskontrolloperation durchgeführt wird.

11. Kommunikationsgerät (500, 600) aufweisend:

Mittel zum Auswählen (523, 526) eines Berichtdefinitionssatzes zum Verwenden für die Übertragung von Rückstand-Informationen von einer Vielzahl von alternativen Berichtdefinitionssätzen, wobei die alternativen Berichtdefinitionssätze alternative Zuordnungen von Berichtbits zu den zu übertragenden Informationen für zumindest einen Berichttyp bereitstellen; und zumindest eines von:

i) Mittel zum Erzeugen (624) eines Berichts mittels Verwendung einer Zuordnung zwischen Informationen und Berichtbits, die von dem ausgewählten Berichtdefinitionssatz spezifiziert sind und

ii) Mittel zum Verarbeiten (524) eines empfangenen Berichts zum Widerherstellen von Informationen, die in dem empfangenen Bericht gemäß der Zuordnung von Informationen und Berichtbits enthalten sind und von dem ausgewählten Berichtdefinitionssatz spezifiziert sind; ferner aufweisend

Mittel (526, 626) zum Überwachen von Verkehr zum Ermitteln von aktiven Verkehrsflüssen (562, 654) und wobei das Mittel zum Auswählen zum Durchführen der Auswahl als eine Funktion von Verkehrsflussinformation, die den bestimmten aktiven Verkehrsflüssen entspricht, geeignet ist; ferner aufweisend Mittel (530, 630) zum Ermitteln von Verkehrsflussinformation (569, 662), die den bestimmten aktiven Verkehrsflüssen entspricht, die zumindest einigen der ermittelten aktiven Verkehrsflüssen entspricht, wobei die Verkehrsflusstypinformation in der Verkehrsflussinformation, die von dem Mittel zum Auswählen eines Berichtdefinitionssatzes verwendet wird, enthalten ist; und wobei die Verkehrsflusstypinformation, die einem Verkehrsfluss entspricht, einen von einem "Best Effort"-Verkehrsfluss und einem Latenzgebunden-Verkehrsfluss anzeigt.

12. Kommunikationsgerät nach Anspruch 11, ferner aufweisend:

Mittel (528, 628) zum Ermitteln von QoS-Profilen (570, 658), die zumindest einigen ermittelten aktiven Verkehrsflüssen entsprechen, wobei die ermittelten QoS-Profile die Verkehrsflussinformation sind; und wobei das Mittel zum Auswählen geeignet ist zum Verwenden von QoS-Profilen zum Auswählen eines Berichtdefinitionssatzes.

13. Kommunikationsgerät nach Anspruch 12, wobei das Mittel zum Auswählen eines Berichtdefinitionssatzes umfasst:

Mittel (525, 625) zum Ermitteln der Anzahl (566, 660) von unterschiedlichen ermittelten QoS-Profilen; und Mittel (527, 627) zum Auswählen des Berichtdefinitionssatzes als eine Funktion der Anzahl von unterschiedlichen ermittelten QoS-Profilen.

14. Kommunikationsgerät nach Anspruch 11, wobei das Mittel zum Auswählen einen Berichtdefinitionssatzauswahlmodul umfasst zum Auswählen des Berichtdefinitionssatzes zum Verwenden für die Übertragung der Rückstandinformationen; und wobei

(i) Mittel zum Erzeugen eines Berichts einen Berichterzeugungsmodul umfasst zum Erzeugen eines Berichts mittels einer Zuordnung von Informationen und Berichtbits die von dem ausgewählten Berichtdefinitionssatz spezifiziert ist; und

(ii) Mittel zum Verarbeiten eines empfangenen Berichts einen Berichtverarbeitungsmodul zum Verarbeiten eines empfangenen Berichts zum Wiederherstellen von Informationen, die in dem empfangenen Bericht enthalten sind, umfasst, gemäß der Zuordnung der Informationen und Berichtbit die von dem ausgewählten Berichtdefinitionssatz angegeben ist.

15. Kommunikationsgerät nach Anspruch 14, ferner aufweisend:

ein Verkehrsüberwachungsmodul (526, 626) zum Ermitteln der aktiven Verkehrsflüssen; und wobei das Auswahlmodul geeignet ist zum Durchführen der Auswahl als eine Funktion der Verkehrsflussinformation, die den ermittelten aktiven Verkehrsflüssen entspricht.

16. Kommunikationsgerät nach Anspruch 15, ferner aufweisend:

ein QoS-Profilermittlungsmodul (528, 628) zum Ermitteln von QoS-Profilen die zumindest einigen ermittelten aktiven Verkehrsflüssen entsprechen, wobei die ermittelten QoS-Profilen Verkehrsflussinformationen sind; und wobei das Auswahlmodul geeignet ist zum Verwenden von QoS-Profilen zum Auswählen eines Berichtdefinitionssatzes.

17. Kommunikationsgerät nach Anspruch 16, wobei das Berichtdefinitionssatzauswahlmodul umfasst:

ein QoS-Zählermodul (525, 626) zum Ermitteln der Anzahl von unterschiedlichen ermittelten QoS-Profilen; und ein QoS-basierten Auswahlmodul (527, 627) zum Auswählen des Berichtdefinitionssatzes als eine Funktion der Anzahl von unterschiedlichen ermittelten QoS-Profilen.

18. Kommunikationsgerät nach Anspruch 15, wobei das Mittel zum Ermitteln von Verkehrsflusstypinformation umfasst:

ein Verkehrsflusstypermittlungsmodul (530, 630) zum Ermitteln der Verkehrsflusstypinformation, die den ermittelten aktiven Verkehrsflüssen entspricht, die einen Verkehrsflusstyp für zumindest einige der ermittelten aktiven Verkehrsflüsse anzeigt.

19. Kommunikationsgerät nach Anspruch 18, wobei der Verkehrflusstyp einen von einem "Best Effort"-Verkehrsfluss und einem Latenzgebundenenverkehrsfluss anzeigt.

20. Kommunikationsgerät nach Anspruch 19, wobei das Berichtdefinitionssatzauswahlmodul umfasst:

ein Verkehrstypbasiertenberichtauswahlmodul (529, 629) zum Auswählen eines ersten Berichtdefinitionssatzes wenn nur "Best Effort"-Verkehrsflüsse aktiv sind und Auswählen eines anderen Berichtdefinitionsatzes wenn zumindest ein "Non Best Effort"-Verkehrsfluss aktiv ist.

21. Kommunikationsgerät nach Anspruch 19, wobei Verkehrsflusstypinformation für unterschiedliche Latenzgebundenenverkehrsflüsse unterschiedliche Arten von zu verwendenden Latenzberichterstattungen anzeigt; und wobei der Berichtdefinitionssatzauswahlnodul umfasst:

ein Verkehrstypbasiertenberichtauswahlmodul zum Auswählen eines Berichtdefinitionssatzes als eine Funktion der Art der zu verwendenden Latenzberichterstattung.

22. Kommunikationsgerät nach Anspruch 15, wobei der ausgewählte Berichtdefinitionssatz zumindest zwei unterschiedliche Anfrageberichtdefinitionen fester Größe umfasst, die Berichten von unterschiedlichen Bitgrößen entsprechen.

23. Kommunikationsgerät nach Anspruch 22, wobei die Berichtdefinitionssätze Aufwärtskanalanfrageberichtdefinitionssätze sind, die zum Definieren von Aufwärtskanalberichten verwendet werden, die das Zuteilen von Aufwärtskanalverkehrsressourcen in einem System anfordern, mittels eines dedizierten Kontrollkanals zum Kommunizieren von Berichten die die Auswärtskanalberichte umfassen.

24. Kommunikationsgerät nach Anspruch 15, ferner aufweisend Speicher der eine Vielzahl von gespeicherten Berichtdefinitionssätzen umfasst.

25. Kommunikationsgerät nach Anspruch 24, wobei das Kommunikationsgerät eine Basisstation (500) ist.

26. Kommunikationsgerät nach Anspruch 24, wobei das Kommunikationsgerät ein drahtloses Gerät (600) ist.

27. Ein computerlesbares Medium, das maschinenausführbare Anweisungen zum Steuern eines Kommunikationsgeräts umfasst, zum Durchführen eines Verfahrens gemäß einem der Ansprüche 1 bis 10.

**Revendications**

1. Procédé (400) de fonctionnement d'un dispositif de communication, le procédé comprenant :

la sélection (410) d'un ensemble de définitions de notifications à utiliser pour la communication d'informations d'arriéré (*"backlog"*), parmi une pluralité d'ensembles de définitions de notifications possibles, les différents ensembles de définitions de notifications possibles fournissant différents schémas de correspondance possibles entre des bits de notification et des informations à communiquer, pour au moins un type de notification ; et
l'exécution (426) de l'une des étapes suivantes :

i) génération d'une notification à l'aide d'un schéma de correspondance entre informations et bits de notification spécifié par l'ensemble de définitions de notifications sélectionné ; et
ii) traitement d'une notification reçue afin de récupérer des informations incluses dans la notification reçue, selon le schéma de correspondance entre informations et bits de notification spécifié par l'ensemble de définitions de notifications sélectionné ; comprenant en outre

l'identification de flux de trafic actifs ; et dans lequel :

ladite sélection est exécutée en fonction d'informations de flux de trafic correspondant auxdits flux de trafic actifs identifiés ;
les informations de flux de trafic correspondant auxdits flux de trafic actifs identifiés indiquent un type de flux de trafic pour au moins certains desdits flux de trafic actifs identifiés ; et
le type de flux de trafic indique l'un d'un flux de trafic de type meilleur effort et d'un flux de trafic à contraintes de latence.

2. Procédé selon la revendication 1, comprenant en outre :

la détermination (406) de profils de QoS correspondant à au moins certains flux de trafic actifs identifiés, lesdits profils de QoS déterminés étant lesdites informations de flux de trafic ; et dans lequel :

ladite sélection comprend l'utilisation desdits profils de QoS pour sélectionner un ensemble de définitions de notifications.

3. Procédé selon la revendication 2, dans lequel l'utilisation desdits profils de QoS pour sélectionner un ensemble de définitions de notifications comprend :

la détermination (422) du nombre de profils de QoS déterminés distincts ; et
la sélection (424) de l'ensemble de définitions de notifications en fonction du nombre de profils de QoS déterminés distincts.

4. Procédé selon la revendication 1, dans lequel la sélection d'un ensemble de définitions de notifications comprend la sélection (416) d'un premier ensemble de définitions de notifications lorsque seuls des flux de trafic du type meilleur effort sont actifs, et la sélection d'un autre ensemble de définitions de notifications lorsqu'au moins un flux de trafic qui n'est pas du type meilleur effort est actif.

5. Procédé selon la revendication 1, dans lequel :

les informations de type de flux de trafic pour différents flux de trafic à contraintes de latence indiquent différents types de notification de latence à utiliser ; et dans lequel :
la sélection d'un ensemble de définitions de notifications comprend la sélection (418) d'un ensemble de définitions de notifications en fonction du type de notification de latence à utiliser.

6. Procédé selon la revendication 1, dans lequel ledit ensemble de définitions de notifications sélectionné comprend au moins deux définitions de notifications de requête de tailles fixes différentes, correspondant à des notifications de tailles binaires différentes.

7. Procédé selon la revendication 6, dans lequel lesdits ensembles de définitions de notifications sont des ensembles de définitions de notifications de requête sur liaison montante qui sont utilisés pour définir des notifications dans le sens montant demandant une allocation de ressources de trafic sur liaison montante dans un système utilisant un canal de contrôle dédié pour la communication de notifications, y compris lesdits notifications dans le sens montant.

8. Procédé selon la revendication 1, dans lequel ladite sélection est effectuée (420) en fonction d'un nombre de groupes de requêtes sur lesquels des informations doivent être notifiées.

9. Procédé selon la revendication 1, dans lequel ladite sélection est effectuée par l'un d'un terminal sans fil et d'une station de base.

10. Procédé selon la revendication 1, dans lequel ladite sélection est effectuée en tant qu'étape d'une opération de contrôle d'admission d'un flux de trafic.

**11.** Dispositif de communication (500, 600), comprenant :

des moyens pour la sélection (523, 526) d'un ensemble de définitions de notifications à utiliser pour la communication d'informations d'arriéré (*"backlog"*), parmi une pluralité d'ensembles de définitions de notifications possibles, les différents ensembles de définitions de notifications possibles fournissant différents schémas de correspondance possibles entre des bits de notification et des informations à communiquer, pour au moins un type de notification ; et au moyen l'un de :

i) moyens pour la génération (624) d'une notification à l'aide d'un schéma de correspondance entre informations et bits de notification spécifié par l'ensemble de définitions de notifications sélectionné ; et
ii) moyens pour le traitement (524) d'une notification reçue afin de récupérer des informations incluses dans la notification reçue, selon le schéma de correspondance entre informations et bits de notification spécifié par l'ensemble de définitions de notifications sélectionné ; comprenant en outre :

des moyens (526, 626) pour la surveillance du trafic afin d'identifier des flux de trafic actifs (562, 654) ;
lesdits moyens de sélection étant adaptés pour exécuter ladite sélection en fonction d'informations de flux de trafic correspondant auxdits flux de trafic actifs identifiés ; comprenant en outre :

des moyens (530, 630) pour la détermination d'informations de flux de trafic (569, 662) correspondant à au moins certains desdits flux de trafic actifs identifiés, lesdites informations de type de flux de trafic étant incluses dans lesdites informations de flux de trafic utilisées par lesdits moyens pour la sélection d'un ensemble de définitions de notifications ;
les informations de type de flux de trafic correspondant à un flux de trafic indiquant l'un d'un flux de trafic de type meilleur effort et d'un flux de trafic à contraintes de latence.

**12.** Dispositif de communication selon la revendication 11, comprenant en outre :

des moyens (528, 628) pour la détermination de profils de QoS (570, 658) correspondant à au moins certains flux de trafic actifs identifiés, lesdits profils de QoS déterminés étant lesdites informations de flux de trafic ; et dans lequel :

lesdits moyens de sélection sont adaptés pour utiliser des profils de QoS pour sélectionner un ensemble de définitions de notifications.

**13.** Dispositif de communication selon la revendication 12, dans lequel lesdits moyens pour la sélection d'un ensemble de définitions de notifications comprennent :

des moyens (525, 625) pour la détermination du nombre (566, 660) de profils de QoS déterminés distincts ; et
des moyens (527, 627) pour la sélection de l'ensemble de définitions de notifications en fonction du nombre de profils de QoS déterminés distincts.

**14.** Dispositif de communication selon la revendication 11, dans lequel :

les moyens de sélection comprennent un module de sélection d'ensemble de définitions de notifications pour la sélection dudit ensemble de définitions de notifications à utiliser pour la communication d'informations d'arriéré ("*backlog*") ; et dans lequel :

i) les moyens pour la génération d'une notification comprennent un module de génération de notification pour la génération d'une notification à l'aide d'un schéma de correspondance entre informations et bits de notification spécifié par l'ensemble de définitions de notifications sélectionné ; et
ii) les moyens pour le traitement d'une notification reçue comprennent un module de traitement de notification pour le traitement d'une notification reçue afin de récupérer des informations incluses dans la notification reçue, selon le schéma de correspondance entre informations et bits de notification spécifié par l'ensemble de définitions de notifications sélectionné.

**15.** Dispositif de communication selon la revendication 14, comprenant en outre :

un module de surveillance de trafic (526, 626) pour l'identification desdits flux de trafic actifs ; et dans lequel :

ledit module de sélection est adapté pour exécuter ladite sélection en fonction desdites informations de flux de trafic correspondant auxdits flux de trafic actifs identifiés.

**16.** Dispositif de communication selon la revendication 15, comprenant en outre :

un module de détermination de profils de QoS (528, 628) pour la détermination de profils de QoS correspondant à au moins certains flux de trafic actifs identifiés, lesdits profils de QoS déterminés étant des informations de flux de trafic ; et dans lequel

ledit module de sélection est adapté pour utiliser des profils de QoS pour sélectionner un ensemble de définitions de notifications.

**17.** Dispositif de communication selon la revendication 16, dans lequel ledit module de sélection d'ensemble de définitions de notifications comprend :

un module de comptage de QoS (525, 626) pour la détermination du nombre de profils de QoS déterminés distincts ; et

un module de sélection sur la base de la QoS (527, 627) pour la sélection de l'ensemble de définitions de notifications en fonction du nombre de profils de QoS déterminés distincts.

**18.** Dispositif de communication selon la revendication 15, lesdits moyens pour la détermination du type de flux de trafic comprenant :

un module de détermination de type de flux de trafic (530, 630) pour la détermination desdites informations de type de flux de trafic correspondant auxdits flux de trafic actifs identifiés indiquant un type de flux de trafic pour au moins certains desdits flux de trafic actifs identifiés.

**19.** Dispositif de communication selon la revendication 18, dans lequel le type de flux de trafic indique l'un d'un flux de trafic de type meilleur effort et d'un flux de trafic à contraintes de latence.

**20.** Dispositif de communication selon la revendication 19, dans lequel ledit module de sélection d'ensemble de définitions de notifications comprend :

un module de sélection de notification sur la base du type de trafic (529, 629) pour la sélection d'un premier ensemble de définitions de notifications lorsque seuls des flux de trafic du type meilleur effort sont actifs, et la sélection d'un autre ensemble de définitions de notifications lorsqu'au moins un flux de trafic qui n'est pas du type meilleur effort est actif.

**21.** Dispositif de communication selon la revendication 19, dans lequel :

les informations de type de flux de trafic pour différents flux de trafic à contraintes de latence indiquent différents types de notifications de latence à utiliser ; et dans lequel

ledit module de sélection d'ensemble de définitions de notifications comprend :

un module de sélection de notification sur la base du type de trafic pour la sélection d'un ensemble de définitions de notifications en fonction du type de notification de latence à utiliser.

**22.** Dispositif de communication selon la revendication 15, dans lequel ledit ensemble de définitions de notifications sélectionné comprend au moins deux définitions de notifications de requête de tailles fixes différentes, correspondant à des notifications de tailles binaires différentes.

**23.** Dispositif de communication selon la revendication 22, dans lequel lesdits ensembles de définitions de notifications sont des ensembles de définitions de notifications de requête sur liaison montante qui sont utilisés pour définir des notifications dans le sens montant demandant une allocation de ressources de trafic sur liaison montante dans un système utilisant un canal de contrôle dédié pour la communication de notifications, y compris lesdits notifications dans le sens montant.

**24.** Dispositif de communication selon la revendication 15, comprenant en outre une mémoire dans laquelle est stockée une pluralité d'ensembles de définitions de notifications.

**25.** Dispositif de communication selon la revendication 24, dans lequel ledit dispositif de communication est une station de base (500).

**26.** Dispositif de communication selon la revendication 24, dans lequel ledit dispositif de communication est un terminal sans fil (600).

**27.** Support lisible par un ordinateur contenant des instructions exécutables par une machine pour la commande d'un dispositif de communication de façon qu'il mette en oeuvre un procédé selon l'une quelconque des revendications 1 à 10.

FIGURE 1

EP 1 964 419 B1

Figure 2

BASE STATION 210

MEMORY 220

DATA/INFORMATION 242

248 SYSTEM DATA/INFO 250

REQUEST DICTIONARY 1 INFO (DEFAULT DICTIONARY)
- 1 BIT UL REQUEST REPORT MAPPING INFO 258
- 3 BIT UL REQUEST REPORT MAPPING INFO 260
- 4 BIT UL REQUEST REPORT MAPPING INFO 262

REQUEST DICTIONARY N INFO
- 1 BIT UL REQUEST REPORT MAPPING INFO 264
- 3 BIT UL REQUEST REPORT MAPPING INFO 266
- 4 BIT UL REQUEST REPORT MAPPING INFO 268

UPLINK REPORT TRANSMISSION SCHEDULING INFORMATION 252
254
DICTIONARY USAGE/CHANGE RULES INFORMATION

DICTIONARY SELECTION CRITERIA 256

274

WT 1 DATA / INFO
CURRENT DICTIONARY 280 270
DICTIONARY CHANGE SIGNALING INFO 272
276 DICTIONARY SELECTION INFO 278
NUMBER QoS PROFILES 282
DELAY SENSITIVITY INFO

RCVD UL SIGNALS INCLUDING ULRQST1 REPORT INFO
RECOVERED 1 BIT BIT PATTERN
RECOVERED INFO CONVEYED BY ULRQST1
284

RCVD UL SIGNALS INCLUDING ULRQST3 REPORT INFO
RECOVERED 3 BIT BIT PATTERN
RECOVERED INFO CONVEYED BY ULRQST3
292 286 294 288 296 290

RCVD UL SIGNALS INCLUDING ULRQST4 REPORT INFO
RECOVERED 4 BIT BIT PATTERN
RECOVERED INFO CONVEYED BY ULRQST4

UPLINK TRANSMISSION INFO 295
298
BACKLOG INFO 297 DELAY INFO 299
ASSIGNED UL TRAFFIC CHANNEL SEGMENT INFO

WT N DATA / INFO 246 244

ROUTINES 218
COMMUNICATIONS ROUTINES 222
224
BASE STATION CONTROL ROUTINES 226
DICTIONARY DETERMINATION MODULE 240
SELECTION MODULE
BIT PATTERN RECOVERY MODULE 228
INFORMATION RECOVERY MODULE 230
BACKLOG INFORMATION UPDATING MODULE 232
DELAY INFORMATION UPDATING MODULE 234
DICTIONARY CHANGE SIGNALING MODULE 236
SCHEDULING MODULE 238

203
202 RECEIVER MODULE, E.G., OFDM RECEIVER 214
DECODER
212

205
204 TRANSMITTER MODULE, E.G., OFDM TRANSMITTER 216
ENCODER

206 PROCESSOR

208 I/O INTERFACE

TO NETWORK NODES AND/OR INTERNET

Figure 2 200

EP 1 964 419 B1

28

# Figure 3

**WIRELESS TERMINAL, e.g., MOBILE NODE** 310

**303** / **302** RECEIVER MODULE, E.G., OFDM RECEIVER 312 — **314** DECODER

**305** / **304** TRANSMITTER MODULE, E.G., OFDM TRANSMITTER — **316** ENCODER

**306** PROCESSOR

**308** USER I/O DEVICES

**318** ROUTINES
- COMMUNICATIONS ROUTINE 322
- **324** WT CONTROL ROUTINES
  - **326** DICTIONARY DETERMINATION MODULE
    - **328** SELECTION MODULE
  - **330** REPORT GENERATION MODULE
  - **332** DICTIONARY CHANGE SIGNALING MODULE
  - **334** ASSIGNMENT SIGNAL PROCESSING MODULE
  - **336** UL TRAFFIC MODULE

**MEMORY** 320

**DATA/INFORMATION** 338

**366** SYSTEM DATA/INFO **368**

REQUEST DICTIONARY 1 INFO (DEFAULT DICTIONARY)
- 1 BIT UL REQUEST REPORT MAPPING INFO **376**
- 3 BIT UL REQUEST REPORT MAPPING INFO **378**
- 4 BIT UL REQUEST REPORT MAPPING INFO **380**

REQUEST DICTIONARY M INFO
- 1 BIT UL REQUEST REPORT MAPPING INFO **382**
- 3 BIT UL REQUEST REPORT MAPPING INFO **384**
- 4 BIT UL REQUEST REPORT MAPPING INFO **386**

**370** UPLINK REPORT TRANSMISSION SCHEDULE INFORMATION **372** DICTIONARY USAGE/CHANGE RULES INFORMATION

DICTIONARY SELECTION CRITERIA **374**

**340** UPLINK TRANSMISSION INFO
- **342** BACKLOG INFO
- **344** DELAY INFO

**346** GENERATED ULRQST1 REPORT INFO
**348** GENERATED ULRQST3 REPORT INFO
**350** GENERATED ULRQST4 REPORT INFO

CURRENT DICTIONARY **352** RCVD TRAFFIC CH. SEGMENT ASSIGNMENT INFO **354**

**356** GENERATED TRAFFIC CHANNEL SEGMENT SIGNAL INFO

**360** **362** DICTIONARY SELECTION INFO **364**

**358** DICTIONARY CHANGE SIGNALING INFO

NUMBER QoS PROFILES | DELAY SENSITIVITY INFO

**Figure 3** 300

EP 1 964 419 B1

400

START METHOD OF OPERATING / 402
A COMMUNICATIONS DEVICE

IDENTIFY ACTIVE TRAFFIC FLOWS / 404

406
DETERMINE QUALITY OF SERVICE (QoS) PROFILES CORRESPONDING TO AT LEAST SOME IDENTIFIED ACTIVE TRAFFIC FLOWS, SAID DETERMINED QoS PROFILES BEING TRAFFIC FLOW INFORMATION

408
DETERMINE TRAFFIC FLOW TYPE CORRESPONDING TO AT LEAST SOME IDENTIFIED ACTIVE TRAFFIC FLOWS, SAID DETERMINED TRAFFIC FLOW TYPE BEING TRAFFIC FLOW INFORMATION, SAID TRAFFIC FLOW TYPE INDICATING, E.G., ONE OF A BEST EFFORT TRAFFIC FLOW AND A LATENCY CONSTRAINED TRAFFIC FLOW

410
SELECT A REPORT DEFINITION SET TO BE USED IN COMMUNICATING BACKLOG INFORMATION FROM A PLURALITY OF ALTERNATIVE REPORT DEFINITION SETS, ALTERNATIVE REPORT DEFINITION SETS PROVIDING ALTERNATIVE MAPPINGS OF REPORT BITS TO INFORMATION TO BE COMMUNICATED FOR AT LEAST ONE REPORT TYPE

412
PERFORM SAID SELECTION AS A FUNCTION OF TRAFFIC FLOW INFORMATION CORRESPONDING TO SAID IDENTIFIED ACTIVE TRAFFIC FLOWS

414
USE SAID QoS PROFILES TO SELECT A REPORT DEFINITION SET

422
DETERMINE THE NUMBER OF DISTINCT DETERMINED QoS PROFILES

424
SELECT THE REPORT DEFINITION SET AS A FUNCTION OF THE NUMBER OF DISTINCT DETERMINED QoS PROFILES

416
PERFORM SAID SELECTION AS A FUNCTION OF WHETHER THERE ARE ONLY BEST EFFORT TRAFFIC FLOWS ACTIVE, ONLY NON-BEST EFFORT TRAFFIC FLOWS, E.G., LATENCY CONSTRAINED TRAFFIC FLOWS ACTIVE, OR A MIXTURE OF BEST EFFORT AND NON-BEST EFFORT TRAFFIC FLOWS ACTIVE

418
PERFORM SAID SELECTION AS A FUNCTION OF THE TYPE OF LATENCY REPORTING TO BE USED

420
PERFORM SAID SELECTION AS A FUNCTION OF THE NUMBER OF REQUEST GROUPS ON WHICH INFORMATION IS TO BE REPORTED

426
PERFORM ONE OF:
i) GENERATING A REPORT USING AN INFORMATION TO REPORT BIT MAPPING SPECIFIED BY THE SELECTED REPORT DEFINITION SET; AND
ii) PROCESS A RECEIVED REPORT TO RECOVER INFORMATION INCLUDED IN THE RECEIVED REPORT IN ACCORDANCE WITH THE INFORMATION TO REPORT BIT MAPPING SPECIFIED BY THE SELECTED REPORT DEFINITION SET

Figure 4

EP 1 964 419 B1

**BASE STATION** 510

5I6     MEMORY     518

**ROUTINES**

COMMUNICATIONS ROUTINES 520

522

**BASE STATION CONTROL ROUTINES** 523

REPORT DEFINITION SET SELECTION MODULE

QoS COUNTING MODULE 525

527

QoS BASED SELECTION MODULE

TRAFFIC TYPE BASED SELECTION MODULE 529

REPORT PROCESSING MODULE 524

TRAFFIC MONITORING MODULE 526

QoS PROFILE DETERMINATION MODULE 528

TRAFFIC FLOW TYPE DETERMINATION MODULE 530

**DATA/INFORMATION**

532

REPORT DEFINITION SET 1 INFO (DEFAULT REQUEST DICTIONARY)

1 BIT UL REQUEST REPORT MAPPING INFO 540

3 BIT UL REQUEST REPORT MAPPING INFO 542

4 BIT UL REQUEST REPORT MAPPING INFO 544

534

REPORT DEFINITION SET N INFO (REQUEST DICTIONARY N)

1 BIT UL REQUEST REPORT MAPPING INFO 546

3 BIT UL REQUEST REPORT MAPPING INFO 548

4 BIT UL REQUEST REPORT MAPPING INFO 550

TIMING/FREQEUNCY STRUCTURE INFO 536

538

**WT DATA/INFO** 552

556     **WT 1 DATA/INFO**

SELECTED REPORT DEFINITION SET INFO

RECEIVED UL REQUEST REPORT 558

RECOVERED INFORMATION 560

IDENTIFIED ACTIVE TRAFFIC FLOWS 562

TRAFFIC FLOW INFO 570

DETERMINED QoS PROFILES 564

566

DETERMINED NUMBER OF DISTINCT QoS PROFILES

569

DETERMINED TRAFFIC FLOW TYPE INFO

WT N DATA/INFO 554

503

502

RECEIVER MODULE, E.G., OFDM RECEIVER

512

505

504

TRANSMITTER MODULE, E.G., OFDM TRANSMITTER

506

PROCESSOR

508

I/O INTERFACE

TO NETWORK NODES AND/OR INTERNET

**Figure 5**     500

WIRELESS TERMINAL, E.G., MOBILE NODE 610

Figure 6 600

FIGURE 7

EP 1 964 419 B1

| EXEMPLARY DEDICATED CONTROL CHANNEL REPORTS | |
|---|---|
| NAME | DESCRIPTION |
| DLSNR5 | ABSOLUTE REPORT OF DL SNR (5 BITS) |
| RVSD2 | RESERVED BITS (2 BITS) |
| DLDSNR3 | RELATIVE REPORT OF DL SNR (3 BITS) |
| TYPE 2 | TYPE OF FLEXIBLE REPORT (2 BITS) |
| BODY 4 | BODY OF FLEXIBLE REPORT (4 BITS) |
| ULRQST1 | UL TRAFFIC REQUEST (1 BITS) |
| ULRQST3 | UL TRAFFIC REQUEST (3 BITS) |
| ULRQST4 | UL TRAFFIC REQUEST (4 BITS) |
| ULTxBKF5 | UL TRANSMISSION POWER BACKOFF (5 BITS) |
| DLBNR4 | DL BEACON RATIO (4 BITS) (INTERFERENCE REPORT) |

# FIGURE 8

FIGURE 9

1000　　1002　　1004

| Format of ULRQST1 For request Dictionaries 0, 1, 2, 3 | |
|---|---|
| Bits (MSb:LSb) | Notes |
| 0b0 | $N[0]+N[1]=0$ |
| 0b1 | $N[0]+N[1]>0$ |

# FIGURE 10

1100

1102　　1104　　1106

| Calculations of parameters y and z: | | |
|---|---|---|
| Condition | y | z |
| (x>28) AND (b>=11) | 2 | $\min(10, N_{max})$ |
| (x>27) AND (b>=10) | 2 | $\min(9, N_{max})$ |
| (x>25) AND (b>=9) | 2 | $\min(8, N_{max})$ |
| (x>23) AND (b>=8) | 2 | $\min(7, N_{max})$ |
| (x>21) AND (b>=7) | 2 | $\min(6, N_{max})$ |
| (x>18) AND (b>=5) | 1 | $\min(5, N_{max})$ |
| (x>16) AND (b>=3) | 1 | $\min(4, N_{max})$ |
| (x>15) AND (b>=1) | 1 | $\min(3, N_{max})$ |
| (x>12) AND (b<-1) | 1 | $\min(2, N_{max})$ |
| Otherwise | 1 | $\min(1, N_{max})$ |

# FIGURE 11

1200

1202

1204

| Default request dictionary (RD reference number = 0): format of ULRQST4: | |
|---|---|
| Bits (MSb:LSb) | Notes |
| 0b0000 | $N[0]=0$, $N[1]+N[2]+N[3]=0$, $N_{123, min}=0$, $g=1$ |
| 0b0001 | $N[0]=1{:}3$, $N_{123, min}=0$, $g=1$ |
| 0b0010 | $N[0]>=4$, $N_{123, min}=0$, $g=1$ |
| 0b0011 | $ceil((N[1]+N[2]+N[3])/y)=1$, $N_{123, min}=0$, $g=1$ |
| 0b0100 | $ceil((N[1]+N[2]+N[3])/y)=2$, $N_{123, min}=0$, $g=1$ |
| 0b0101 | $ceil((N[1]+N[2]+N[3])/y)=3$, $N_{123, min}=0$, $g=1$ |
| 0b0110 | $ceil((N[1]+N[2]+N[3])/y)=4{:}5$, $N_{123, min}=0$, $g=1$ |
| 0b0111 | $ceil((N[1]+N[2]+N[3])/z)=2$, $N_{123, min}=z+1$, $g=1$ |
| 0b1000 | $ceil((N[1]+N[2]+N[3])/z)=3$, $N_{123, min}=2{*}z+1$, $g=1$ |
| 0b1001 | $ceil((N[1]+N[2]+N[3])/z)=4$, $N_{123, min}=3{*}z+1$, $g=1$ |
| 0b1010 | $ceil((N[1]+N[2]+N[3])/z)=5$, $N_{123, min}=4{*}z+1$, $g=1$ |
| 0b1011 | $ceil((N[1]+N[2]+N[3])/z)=6$, $N_{123, min}=5{*}z+1$, $g=1$ |
| 0b1100 | $ceil((N[1]+N[2]+N[3])/z)=7$, $N_{123, min}=6{*}z+1$, $g=1$ |
| 0b1101 | $ceil((N[1]+N[2]+N[3])/z)=8{:}9$, $N_{123, min}=7{*}z+1$, $g=2$ |
| 0b1110 | $ceil((N[1]+N[2]+N[3])/z)=10{:}11$, $N_{123, min}=9{*}z+1$, $g=2$ |
| 0b1111 | $ceil((N[1]+N[2]+N[3])/z)>=12$, $N_{123, min}=11{*}z+1$, $g=2$ |

## FIGURE 12

1300

1302

1304

| Default request dictionary (RD reference number = 0): format of ULRQST3: | |
|---|---|
| Bits (MSb:LSb) | Notes |
| 0b000 | $N[0]=0$, $d_{123}=0$ |
| 0b001 | $N[0]=0$, $d_{123}=1$ |
| 0b010 | $N[0]=0$, $d_{123}=2{:}3$ |
| 0b011 | $N[0]=0$, $d_{123}>=4$ |
| 0b100 | $N[0]>=1$, $d_{123}=0$ |
| 0b101 | $N[0]>=1$, $d_{123}=1$ |
| 0b110 | $N[0]>=1$, $d_{123}=2{:}3$ |
| 0b111 | $N[0]>=1$, $d_{123}>=4$ |

## FIGURE 13

1400

1402                          1404

| Request dictionary (RD reference number = 1): format of ULRQST4: | |
|---|---|
| Bits (MSb:LSb) | Notes |
| 0b0000 | No change from the previous request |
| 0b0001 | N[2]=1 |
| 0b0010 | N[2]=2:3 |
| 0b0011 | N[2]=4:6 |
| 0b0100 | N[2]>=7 |
| 0b0101 | ceil((N[1]+N[3])/y)=1 |
| 0b0110 | ceil((N[1]+N[3])/y)=2 |
| 0b0111 | ceil((N[1]+N[3])/y)=3 |
| 0b1000 | ceil((N[1]+N[3])/y)=4:5 |
| 0b1001 | ceil((N[1]+N[3])/z)=2 |
| 0b1010 | ceil((N[1]+N[3])/z)=3 |
| 0b1011 | ceil((N[1]+N[3])/z)=4 |
| 0b1100 | ceil((N[1]+N[3])/z)=5 |
| 0b1101 | ceil((N[1]+N[3])/z)=6 |
| 0b1110 | ceil((N[1]+N[3])/z)=7:8 |
| 0b1111 | ceil((N[1]+N[3])/z)>=9 |

# FIGURE 14

1500                1502                          1504

| Request dictionary (RD reference number = 1): format of ULRQST3: | |
|---|---|
| Bits (MSb:LSb) | Notes |
| 0b000 | N[0]=0, N[2]=0 |
| 0b001 | N[0]=0, N[2]=1 |
| 0b010 | N[0]=0, N[2]=2:3 |
| 0b011 | N[0]=0, N[2]>=4 |
| 0b100 | N[0]>=1, N[2]=0 |
| 0b101 | N[0]>=1, N[2]=1 |
| 0b110 | N[0]>=1, N[2]=2:3 |
| 0b111 | N[0]>=1, N[2]>=4 |

# FIGURE 15

1600

1602                                           1604

| Request dictionary (RD reference number = 2): format of ULRQST4: | |
|---|---|
| **Bits (MSb:LSb)** | **Notes** |
| 0b0000 | No change from the previous request |
| 0b0001 | N[1]=1 |
| 0b0010 | N[1]=2 |
| 0b0011 | N[1]=3 |
| 0b0100 | N[1]>=4 |
| 0b0101 | ceil((N[2]+N[3])/y)=1 |
| 0b0110 | ceil((N[2]+N[3])/y)=2 |
| 0b0111 | ceil((N[2]+N[3])/y)=3 |
| 0b1000 | ceil((N[2]+N[3])/y)=4:5 |
| 0b1001 | ceil((N[2]+N[3])/z)=2 |
| 0b1010 | ceil((N[2]+N[3])/z)=3 |
| 0b1011 | ceil((N[2]+N[3])/z)=4 |
| 0b1100 | ceil((N[2]+N[3])/z)=5 |
| 0b1101 | ceil((N[2]+N[3])/z)=6 |
| 0b1110 | ceil((N[2]+N[3])/z)=7:8 |
| 0b1111 | ceil((N[2]+N[3])/z)>=9 |

# FIGURE 16

1700              1702                                     1704

| Request dictionary (RD reference number = 2): format of ULRQST3: | |
|---|---|
| **Bits (MSb:LSb)** | **Notes** |
| 0b000 | N[0]=0, N[1]=0 |
| 0b001 | N[0]=0, N[1]=1 |
| 0b010 | N[0]=0, N[1]=2 |
| 0b011 | N[0]=0, N[1]>=3 |
| 0b100 | N[0]>=1, N[1]=0 |
| 0b101 | N[0]>=1, N[1]=1 |
| 0b110 | N[0]>=1, N[1]=2 |
| 0b111 | N[0]>=1, N[1]>=3 |

# FIGURE 17

1800

1802                                      1804

| Request dictionary (RD reference number = 3): format of ULRQST4: ||
|---|---|
| Bits (MSb:LSb) | Notes |
| 0b0000 | No change from the previous request |
| 0b0001 | N[1]=1 |
| 0b0010 | N[1]=2 |
| 0b0011 | N[1]=3 |
| 0b0100 | N[1]>=4 |
| 0b0101 | N[2]=1 |
| 0b0110 | N[2]=2:3 |
| 0b0111 | N[2]=4:6 |
| 0b1000 | N[2]>=7 |
| 0b1001 | ceil(N[3])/y)=1 |
| 0b1010 | ceil(N[3])/y)=2:3 |
| 0b1011 | ceil(N[3])/y)=4:5 |
| 0b1100 | ceil(N[3])/z)=2 |
| 0b1101 | ceil(N[3])/z)=3 |
| 0b1110 | ceil(N[3])/z)=4:5 |
| 0b1111 | ceil(N[3])/z)>=6 |

# FIGURE 18

1900

1902                                      1904

| Request dictionary (RD reference number = 3): format of ULRQST3: ||
|---|---|
| Bits (MSb:LSb) | Notes |
| 0b000 | N[0]=0, N[1]=0 |
| 0b001 | N[0]=0, N[1]=1 |
| 0b010 | N[0]=0, N[1]=2 |
| 0b011 | N[0]=0, N[1]>=3 |
| 0b100 | N[0]>=1, N[1]=0 |
| 0b101 | N[0]>=1, N[1]=1 |
| 0b110 | N[0]>=1, N[1]=2 |
| 0b111 | N[0]>=1, N[1]>=3 |

# FIGURE 19

2000

| FORMAT OF ULRQST1 (REQUEST DICTIONARY A, B AND C) | |
|---|---|
| BITS (MSb:LSb) | Notes |
| 0b0 | (N = 0) or (N = 1+, D >= T) |
| 0b1 | N = 1+, D <T |

FIGURE 20

2100

2102          2104     2106

| Table to calculate y and z control factors from DCCH Backoff Report and Beacon Ratio Report | | |
| --- | --- | --- |
| Condition | y | z |
| $(x>28)$ AND $(b \geq 11)$ | 2 | $\min(10, N_{max})$ |
| $(x>27)$ AND $(b \geq 10)$ | 2 | $\min(9, N_{max})$ |
| $(x>25)$ AND $(b \geq 9)$ | 2 | $\min(8, N_{max})$ |
| $(x>23)$ AND $(b \geq 8)$ | 2 | $\min(7, N_{max})$ |
| $(x>21)$ AND $(b \geq 7)$ | 2 | $\min(6, N_{max})$ |
| $(x>18)$ AND $(b \geq 5)$ | 1 | $\min(5, N_{max})$ |
| $(x>16)$ AND $(b \geq 3)$ | 1 | $\min(4, N_{max})$ |
| $(x>15)$ AND $(b \geq 1)$ | 1 | $\min(3, N_{max})$ |
| $(x>12)$ AND $(b \geq 1)$ | 1 | $\min(2, N_{max})$ |
| Otherwise | 1 | $\min(1, N_{max})$ |

# FIGURE 21

2200

| 3-bit UL-RQST, Dictionary A | | |
|---|---|---|
| Bits (MSb:LSb) | Value | $N^{min}$ |
| 0b000 | Buffers are empty | 0 |
| 0b001 | ceil(N/y) = 1 | 0 |
| 0b010 | ceil(N/y) = 2:3 | 0 |
| 0b011 | ceil(N/y) = 4:5 | 0 |
| 0b100 | ceil(N/z) = 2 | z + 1 |
| 0b101 | ceil(N/z) = 3 | 2z + 1 |
| 0b110 | ceil(N/z) = 4 | 3z + 1 |
| 0b111 | ceil(N/z) = 5+ | 4z + 1 |

# FIGURE 22

2300

| 4-bit UL-RQST, Dictionary A | |
|---|---|
| Bits (MSb:LSb) | Value |
| 0b0000 | Buffers are empty |
| 0b0001 | N = 1+, D <= 10 |
| 0b0010 | N = 1+, D <= 25 |
| 0b0011 | N = 1+, D <= 50 |
| 0b0100 | N = 1+, D <= 75 |
| 0b0101 | N = 1+, D <= $T^{max}$ |
| 0b0110 | $\Delta$ = 0 |
| 0b0111 | $\Delta$ = 1 |
| 0b1000 | $\Delta$ = 2 |
| 0b1001 | $\Delta$ = 3 |
| 0b1010 | $\Delta$ = 4:5 |
| 0b1011 | ceil(N/z) = 6 |
| 0b1100 | ceil(N/z) = 7 |
| 0b1101 | ceil(N/z) = 8:9 |
| 0b1110 | ceil(N/z) = 10:11 |
| 0b1111 | ceil(N/z) = 12+ |

# FIGURE 23

2400

| 3-bit UL-RQST, Dictionary B | |
|---|---|
| Bits (MSb:LSb) | Value |
| 0b000 | Buffers are empty |
| 0b001 | $N = 1+, D < = 10$ |
| 0b010 | $N = 1+, D < = 25$ |
| 0b011 | $N = 1+, D < = 40$ |
| 0b100 | $N = 1+, D < = 60$ |
| 0b101 | $N = 1+, D < = 80$ |
| 0b110 | $N = 1+, D < = T^{max}$ |
| 0b111 | $N = 1+, D > T^{max}$ |

## FIGURE 24

2500

| 4-bit UL-RQST, Dictionary B | |
|---|---|
| Bits (MSb:LSb) | Value |
| 0b0000 | Buffers are empty |
| 0b0001 | $ceil(N/y) = 1$ |
| 0b0010 | $ceil(N/y) = 2:3$ |
| 0b0011 | $ceil(N/y) = 4:5$ |
| 0b0100 | $ceil(N/z) = 2$ |
| 0b0101 | $ceil(N/z) = 3$ |
| 0b0110 | $ceil(N/z) = 4$ |
| 0b0111 | $ceil(N/z) = 5$ |
| 0b1000 | $ceil(N/y) = 6$ |
| 0b1001 | $ceil(N/y) = 7$ |
| 0b1010 | $ceil(N/y) = 8$ |
| 0b1011 | $ceil(N/z) = 9$ |
| 0b1100 | $ceil(N/z) = 10$ |
| 0b1101 | $ceil(N/z) = 11$ |
| 0b1110 | $ceil(N/z) = 12:13$ |
| 0b1111 | $ceil(N/y) = 14+$ |

## FIGURE 25

2600

| 3-bit UL-RQST, Dictionary C | |
|---|---|
| Bits (MSb:LSb) | Value |
| 0b000 | Buffers are empty |
| 0b001 | $N = 1+, D < = 10$ |
| 0b010 | $N = 1+, D < = 25$ |
| 0b011 | $N = 1+, D < = 40$ |
| 0b100 | $N = 1+, D < = 60$ |
| 0b101 | $N = 1+, D < = 80$ |
| 0b110 | $N = 1+, D < = T^{max}$ |
| 0b111 | $N = 1+, D > T^{max}$ |

# FIGURE 26

2700

| 4-bit UL-RQST, Dictionary C | |
|---|---|
| Bits (MSb:LSb) | Value |
| 0b0000 | Buffers are empty |
| 0b0001 | $ceil(N_D/y) = 2{:}3$ |
| 0b0010 | $ceil(N_D/y) = 4{:}5$ |
| 0b0011 | $ceil(N_D/z) = 2+$ |
| 0b0100 | $ceil(N_D/y) = 1, ceil(N/y) = 1$ |
| 0b0101 | $ceil(N_D/y) = 1, ceil(N/y) = 2{:}3$ |
| 0b0110 | $ceil(N_D/y) = 1, ceil(N/y) = 4{:}5$ |
| 0b0111 | $ceil(N_D/y) = 1, ceil(N/z) = 2$ |
| 0b1000 | $ceil(N_D/y) = 1, ceil(N/z) = 3$ |
| 0b1001 | $ceil(N_D/y) = 1, ceil(N/z) = 4$ |
| 0b1010 | $ceil(N_D/y) = 1, ceil(N/z) = 5$ |
| 0b1011 | $ceil(N_D/y) = 1, ceil(N/y) = 6$ |
| 0b1100 | $ceil(N_D/y) = 1, ceil(N/y) = 7$ |
| 0b1101 | $ceil(N_D/y) = 1, ceil(N/y) = 8{:}9$ |
| 0b1110 | $ceil(N_D/y) = 1, ceil(N/z) = 10{:}11$ |
| 0b1111 | $ceil(N_D/y) = 1, ceil(N/z) = 12+$ |

# FIGURE 27

2800

| FORMAT OF ULRQST1 (REQUEST DICTIONARY D AND E) | |
| --- | --- |
| BITS (MSb:LSb) | Notes |
| 0b0 | $N_D = 0$ |
| 0b1 | $N_D > 0$ |

## FIGURE 28

2900

| 4-bit UL-RQST Report, Dictionary D | |
|---|---|
| **Bits (MSb:LSb)** | **Value** |
| 0b0000 | $N_T = 0$ |
| 0b0001 | $ceil(N_D/y) = 1{:}3$ |
| 0b0010 | $ceil(N_D/y) = 4+$ |
| 0b0011 | $ceil(N_T/y) = 1$ |
| 0b0100 | $ceil(N_T/y) = 2$ |
| 0b0101 | $ceil(N_T/y) = 3$ |
| 0b0110 | $ceil(N_T/y) = 4{:}5$ |
| 0b0111 | $ceil(N_T/z) = 2$ |
| 0b1000 | $ceil(N_T/z) = 3$ |
| 0b1001 | $ceil(N_T/z) = 4$ |
| 0b1010 | $ceil(N_T/z) = 5$ |
| 0b1011 | $ceil(N_T/y) = 6$ |
| 0b1100 | $ceil(N_T/y) = 7$ |
| 0b1101 | $ceil(N_T/y) = 8{:}9$ |
| 0b1110 | $ceil(N_T/z) = 10{:}11$ |
| 0b1111 | $ceil(N_T/z) = 12+$ |

# FIGURE 29

3000

| 3-bit UL-RQST Report, Dictionary D | |
|---|---|
| **Bits (MSb:LSb)** | **Value** |
| 0b000 | $N_T = 0$ |
| 0b001 | $N_T = 1+, D_{min} <= 10$ |
| 0b010 | $N_T = 1+, D_{min} <= 25$ |
| 0b011 | $N_T = 1+, D_{min} <= 40$ |
| 0b100 | $N_T = 1+, D_{min} <= 60$ |
| 0b101 | $N_T = 1+, D_{min} <= 80$ |
| 0b110 | $N_T = 1+, D_{min} <= 100$ |
| 0b111 | $N_T = 1+, D_{min} > 100$ |

# FIGURE 30

3100

| Bits (MSb:LSb) | Value | $N_T^{min}$ | g |
|---|---|---|---|
| 0b0000 | $N_T = 0$ | 0 | 1 |
| 0b0001 | $ceil(N_D/y) = 1{:}3$ | 0 | 1 |
| 0b0010 | $ceil(N_D/y) = 4+$ | 0 | 1 |
| 0b0011 | $ceil(N_T/y) = 1$ | 0 | 1 |
| 0b0100 | $ceil(N_T/y) = 2$ | 0 | 1 |
| 0b0101 | $ceil(N_T/y) = 3$ | 0 | 1 |
| 0b0110 | $ceil(N_T/y) = 4{:}5$ | 0 | 1 |
| 0b0111 | $ceil(N_T/z) = 2$ | $z + 1$ | 1 |
| 0b1000 | $ceil(N_T/z) = 3$ | $2z + 1$ | 1 |
| 0b1001 | $ceil(N_T/z) = 4$ | $3z + 1$ | 1 |
| 0b1010 | $ceil(N_T/z) = 5$ | $4z + 1$ | 1 |
| 0b1011 | $ceil(N_T/y) = 6$ | $5z + 1$ | 1 |
| 0b1100 | $ceil(N_T/y) = 7$ | $6z + 1$ | 1 |
| 0b1101 | $ceil(N_T/y) = 8{:}9$ | $7z + 1$ | 2 |
| 0b1110 | $ceil(N_T/z) = 10{:}11$ | $9z + 1$ | 2 |
| 0b1111 | $ceil(N_T/z) = 12+$ | $11z + 1$ | 2 |

Table title: 4-bit UL-RQST Report, Dictionary E

# FIGURE 31

3200

| Bits (MSb:LSb) | Value |
|---|---|
| 0b000 | $[N_D = 0, \Delta = 0]$ |
| 0b001 | $[N_D = 0, \Delta = 1]$ |
| 0b010 | $[N_D = 0, \Delta = 2{:}3]$ |
| 0b011 | $[N_D = 0, \Delta = 4+]$ |
| 0b100 | $[N_D = 1+, \Delta = 0]$ |
| 0b101 | $[N_D = 1+, \Delta = 1]$ |
| 0b110 | $[N_D = 1+, \Delta = 2{:}3]$ |
| 0b111 | $[N_D = 1+, \Delta = 4+]$ |

Table title: 3-bit UL-RQST Report, Dictionary E

# FIGURE 32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004084503 A2

- EP 1511245 A2